# EUROPEAN PATENT APPLICATION

(11) **EP 4 831 014 A1**
(43) Date of publication of application: **28.10.2026**
(21) Application number: 24907449.3
(22) Date of filing: 18.12.2024
(51) Int. Cl.: B60R 21/235

(54) **AIRBAG AND METHOD FOR MANUFACTURING SAME**

(30) Priority: 20.12.2023 JP 2023214615
(71) Applicant: Toyotsu Vehitecs Co., Ltd., Mie 511-0244 (JP); Toyota Tsusho Corporation, Nagoya-shi Aichi 450-8575 (JP); Autoliv Japan Ltd., Yokohama-shi, Kanagawa 222-8580 (JP)
(72) Inventor: ENDO Kazuaki, Kasumigaura-city, Ibaraki 3150056 (JP); SAITO Hiroe, Kasumigaura-city, Ibaraki 3150056 (JP); SHIMIZU Takayuki, Tsukuba-city, Ibaraki 3050031 (JP)
(74) Representative: Leske, Thomas
(86) International application number: PCT/JP2024/044739
(87) International publication number: WO 2025/135065

(57) **Abstract**

[Problem] To reduce leakage of inflation gas from a seam of an airbag, a coating material has been applied to the seam. While techniques exist for application from one side or application from both sides, there is a problem that the coating material applied first adheres to a table or runs off when applying to a side opposite to the side to which it has been applied at first.

[Solution] This problem can be prevented by making viscosity of the binding material which is applied at first to the seam of one side of the base fabric higher than viscosity of the binding material which is applied next to the seam of an opposite side of the base fabric.

## Description

### Technical Field

The present invention relates to a bag body of an airbag and a method for manufacturing the same.

### Background Art

As a safety device for automobiles, SRS airbags (airbags as auxiliary devices for seat belts; hereinafter referred to as airbags) began to be installed as an option in Japan in 1987, following seat belts. Initially, they were installed in the driver's seat. Over time, airbags became standard equipment in the driver's seat (steering wheel) and were also installed in the passenger seat. When an automobile collision is detected by an acceleration sensor, gas is instantly injected into the airbag in units of 0.01 seconds, causing it to inflate. Once fully inflated and deployed, the gas is released and the airbag deflates. Through this series of operations, the airbag assists the seat belt and reduces the impact caused by collisions between the driver and the steering wheel, and between the occupant of the passenger seat and the dashboard or the like. In addition to the aforementioned airbag, various types of airbags have been developed and put into practical use, including those that inflate between the side window and the head to reduce impact, those that inflate from the side of the seat back toward the side or front of the occupant's body to protect the abdomen and chest, and pedestrian airbags that deploy on the car's hood in the event of a collision with a pedestrian to reduce the collision between the pedestrian and the hood.

When an automobile collides with an obstacle in front of it, the automobile decelerates rapidly while the occupants continue to move forward due to inertia. Therefore, for example, even if the driver is wearing a seat belt, there is a risk of hitting his or her chest or head against the steering wheel. For this reason, an airbag is installed in the steering wheel area as described above. The airbag inflates completely in about 0.03 seconds after detecting the automobile collision, catches the driver, absorbs energy, and then deflates. The entire process from the vehicle collision to airbag inflation and deflation is completed in about 0.2 seconds. If the airbag inflates slowly, the driver will hit the steering wheel. For quick inflation, in addition to the method for generating the inflation gas, it is also important to prevent more than a predetermined amount of the inflation gas from leaking from unwanted portions of the airbag so that the bag body of the airbag can inflate completely during the inflation process. On the other hand, as a precaution against collisions from the side of an automobile, the followings are installed: side curtain airbags for preventing collisions with the side windows or the side of the vehicle interior, or preventing occupants (including the driver) from being injured by contact with the side windows shattered during the collision or the outside of the vehicle or from being thrown from the vehicle; center airbags installed between the driver's seat and the passenger seat for preventing the collision between the driver and the occupant of the passenger seat, or preventing the head from coming into contact with the interior materials such as the door on the side opposite to the collision side (the non-collision side); and the like. These are designed to stay inflated for a longer period than the airbags in the steering wheel area.

Patent Literature 1 discloses a technique in which a bag body of an airbag is sewn and a coating material is applied to the seam to prevent inflation gas from leaking from the seam, which could result in the airbag not inflating sufficiently or inflating slowly.

### Citation List

### Patent Literature

[PTL1] Japanese Unexamined Patent Application Publication (Translation of PCT Application) No. 2016-533293

### Summary of Invention

### Technical Problem

Patent Literature 1 describes that when the coating material is applied to the seam, it is applied to only one side and allowed to reach the opposite side through a sewing hole, or it is applied to both sides to cover the seam. Since Patent Literature 1 does not specifically disclose the viscosity of the coating agent when applied to both sides, it is assumed that the same coating material is used for the first surface to be coated and the second surface to be coated. If a coating agent (a binding material in the present application) with low viscosity is used, problems arise such as the coating material penetrating to the opposite side when applied to the first surface and adhering to a table supporting the bag body, or the coding material adhering to the table re-adhering to unexpected parts of the bag body. Furthermore, regardless of whether double-side application method in which the coating agent is applied to the surfaces on both sides or single-side application method in which the coating agent is applied to the surface on only one side is adopted, if the thread is twisted thread, the coating agent may not penetrate between the fibers constituting the twisted thread depending on the viscosity of the coating agent. Then, as a result of the large tension applied to the thread when the airbag inflates, the twist of the thread tightens and a gap may be formed between the sewing thread and a sewing thread insertion cross section of the base fabric in a sewing hole area, which may cause gas for inflating the airbag to leak out.

Therefore, the present invention is configured such that at least some of the fibers of the sewing thread are bound by a binding material so that the "twist" of the twisted thread does not tighten even when the airbag inflates. This is because the presence of a binding material layer between the fibers prevents them from shifting and the spacing between them from narrowing. In this way, it is configured such that a gap is less likely to be formed between the sewing thread and the sewing thread insertion cross section of the base fabric in the sewing hole area. When applying the binding material to the seam, in order to prevent the binding material from adhering to a table in contact with a surface opposite the surface to which it has been applied, a ratio of the sewing thread exposed from the binding material in areas other than the sewing hole area on the base fabric, and a ratio of the sewing thread covered with the binding material were specified. Then, regarding a ratio of the binding material between the fibers constituting the sewing thread, an area ratio of the cross section of the sewing thread (a ratio of the cross-sectional area of the binding material to the cross-sectional area of the thread) was specified. In addition, the viscosity of the binding material (corresponding to the coating agent in Patent Literature 1) is optimized so that, when applying it on the both surfaces, a binding material with higher viscosity is used as the binding material applied at first than the binding material applied to the opposite side, thereby preventing the binding material with lower viscosity from adhering to a support table through the bag body and the seam of the bag body when the binding material is applied to the opposite side during the application process.

Even in the case of single-side application, by specifying the viscosity, the seam can be efficiently sealed, the flow of the binding material onto the base fabric surface opposite to the application surface can be adjusted, and furthermore, a predetermined ratio of the binding material can be dispersed between the fibers constituting the sewing thread. In the case of double-side application described above, a binding material with lower viscosity is used as the binding material applied to the opposite side later than the binding material applied at first so that the binding material is more likely to penetrate between the fibers constituting the twisted thread and integrates with the binding material applied at first, allowing for sealing of the seam with high work efficiency. Furthermore, the objective is to provide a method for manufacturing a bag body of an airbag in which, at least some of the fibers constituting the sewing thread are bound so that a gap is less likely to be formed between the sewing thread and the sewing thread insertion cross section of the base fabric in the sewing hole area as a result of the "twist" of the fibers of the sewing thread, which is twisted thread, tightening.

### Solution to Problem

To solve the above problems, the invention provides the following.

As a first invention, an airbag is provided, consisting of
a sheet-like first base fabric, a sheet-like second base fabric, and a sewing thread made by twisting multiple fibers together for sewing the first base fabric and the second base fabric together to form a gas injection space, wherein
at least some of fibers of the sewing thread are bound by a binding material so that a gap is less likely to be formed between the sewing thread and the base fabrics in a sewing hole area as a result of twist of the sewing thread tightening by tension generated in the sewing thread.

As a second invention, the airbag based on the first invention is provided, in which
at least a portion of the sewing thread is exposed from the binding material in an area other than the sewing hole area on at least one or more base fabrics among the first base fabric or the second base fabric.

As a third invention, the airbag based on one of the first or second invention is provided, in which
in a region which is present on a base fabric surface of one base fabric of the base fabrics on a side where the binding material has been applied to a seam and which runs along a sewing direction with a width approximately equal to a thickness of the sewing thread, a two-dimensional ratio of an area of the sewing thread exposed from the binding material at least partially is larger than 0% and smaller than or equal to 30%.

As a fourth invention, the airbag based on any one of the first to third inventions is provided, in which
in a region which is present on a base fabric surface of one base fabric of the base fabrics on a side where the binding material has not been applied to the seam and which runs along the sewing direction with a width approximately equal to the sewing thread (which may include the sewing thread from the opposite base fabric), a two-dimensional ratio of an area covered with the binding material (including both of the sewing thread and the base fabric) is 5% or more.

As a fifth invention, the airbag based on any one of the first to fourth inventions is provided, in which
the sewing thread on a side of the base fabric where the binding material has been applied has a cross-sectional area of the binding material which is 10% or more and 25% or less of a cross-sectional area of the sewing thread (55% or more and 100% or less of a cross-sectional area of a part other than the fibers in the cross-sectional area of the sewing thread).

As a sixth invention, the airbag based on any one of the first to fifth inventions is provided, in which
the sewing thread on a side of the base fabric where the binding material has not been applied has a cross-sectional area of the binding material which is 5% or more and 25% or less of a cross-sectional area of the sewing thread (35% or more and 100% or less of a cross-sectional area of a part other than the fibers in the cross-sectional area of the sewing thread).

As a seventh invention, the airbag based on the first invention is provided, in which when at least a portion of the seam of the first base fabric or/and the second base fabric is made of woven fabric,
fibers constituting the woven fabric in a vicinity of the seam are bound by the binding material so that fibers constituting the woven fabric of the seam of the first base fabric or/and the second base fabric are less likely to unravel.

As an eighth invention, the airbag based on the first or seventh invention is provided, in which,
the fibers in the vicinity of the seam are bound by the binding material so that the fibers constituting the woven fabric of the first base fabric or/and the second base fabric are less likely to unravel.

As a ninth invention, a method for manufacturing the airbag according to any one of the first, seventh, or eighth inventions is provided, including
a first base fabric penetration step for allowing a first binding material to penetrate from a seam of a first base fabric into a sewing thread, and
a second base fabric penetration step for allowing a second binding material to penetrate from a seam of a second base fabric into the sewing thread.

As a tenth invention, the method for manufacturing the airbag based on the ninth invention is provided, in which
the first binding material and the second binding material have different viscosity.

As an eleventh invention, the method for manufacturing the airbag based on the ninth or tenth invention is provided, in which
application of the first binding material and the second binding material is performed on a flat table, and of the two binding materials mentioned above, the binding material applied at first is the binding material having higher viscosity compared to the binding material applied later.

As a twelfth invention, the method for manufacturing the airbag based on any one of the ninth to eleventh inventions is provided, in which
the binding material which is applied at first and has the relatively higher viscosity is applied to a side with an upper thread which is bound to the base fabric surface by a lower thread that is a single continuous sewing thread applied to the base fabric.

As a thirteenth invention, a method for manufacturing the airbag according to the first invention is provided, including
a binding material penetration step for applying the binding material to a seam on a surface of either the first base fabric or the second base fabric, and allowing the binding material to penetrate between the fibers constituting the sewing thread inside the sewing hole area from the sewing hole area on the seam, and
an opposite base fabric side sewing thread fiber binding material penetration step for allowing the binding material to penetrate between at least some of fibers constituting a sewing thread exposed between the sewing holes on a base fabric surface opposite to the base fabric to which the binding material has been applied (a different sewing thread from the sewing thread exposed between the sewing holes on the base fabric surface to which application has been performed).

As a fourteenth invention, the method for manufacturing the airbag based on the thirteenth invention is provided, further including
a base fabric bonding step in which a portion of the binding material which has further penetrated from the sewing hole area accumulates between the first base fabric and the second base fabric in order to bond the first base fabric and the second base fabric.

As a fifteenth invention, the method for manufacturing the airbag based on any one of the ninth to twelfth inventions is provided, in which
a difference in viscosities during application of the binding materials is expressed in Pascal seconds, and a viscosity range of the binding material with higher viscosity and the binding material with lower viscosity is from 3.0 mPa·s to 90 Pa·s.

As a sixteen invention, the method for manufacturing the airbag based on any one of the thirteenth to fourteenth inventions is provided, in which
a difference in viscosities during application of the binding materials is expressed in Pascal seconds, and a viscosity range of the binding material with higher viscosity and the binding material with lower viscosity is from 3.0 mPa·s to 90 Pa·s.

### Advantageous Effects of Invention

With the above-described configurations, the present invention is configured such that at least some of the fibers of the sewing thread are bound by the binding material so that the "twist" of the twisted thread does not tighten even when the airbag inflates. This is because the presence of the binding material layer between the fibers and binding the fibers by the binding material prevents them from shifting and the spacing between them from narrowing. In this way, it is configured such that a gap is less likely to be formed between the sewing thread and the sewing thread insertion cross section of the base fabric in the sewing hole area. When applying the binding material to the seam, in order to prevent the binding material from adhering to a table in contact with a surface opposite the surface to which it has been applied, a ratio of the sewing thread exposed from the binding material in areas other than the sewing hole area on the base fabric, and a ratio of the sewing thread covered with the binding material were specified. Then, regarding a ratio of the binding material between the fibers constituting the sewing thread, an area ratio of the cross section of the sewing thread (a ratio of the cross-sectional area of the binding material to the cross-sectional area of the thread) was specified. In addition, the viscosity of the binding material (corresponding to the coating agent in Patent Literature 1) is optimized so that, when applying it on the both surfaces, the binding material with higher viscosity is used as the binding material applied at first than the binding material applied to the opposite side, thereby preventing the binding material with lower viscosity from adhering to a support table through the bag body and the seam of the bag body when the binding material is applied to the opposite side during the application process.

Even in the case of single-side application, by specifying the viscosity, the seam can be efficiently sealed, the flow of the binding material onto the base fabric surface opposite to the application surface can be adjusted, and furthermore, a predetermined ratio of the binding material can be dispersed between the fibers constituting the sewing thread. In the case of double-side application described above, the binding material with lower viscosity is used as the binding material applied to the opposite side later than the binding material applied at first so that the binding material is more likely to penetrate between the fibers constituting the twisted thread and integrates with the binding material applied at first, allowing for sealing of the seam with high work efficiency. Furthermore, a method for manufacturing a bag body of an airbag can be provided in which, at least some of the fibers constituting the sewing thread are bound so that a gap is less likely to be formed between the sewing thread and the sewing thread insertion cross section of the base fabric in the sewing hole area as a result of the "twist" of the fibers of the sewing thread, which is twisted thread, tightening.

### Brief Description of Drawings

[Fig. 1] Fig. 1 is a schematic plan view of a seam of an airbag of Embodiment 1 of the present invention.
[Fig. 2] Fig. 2 is a schematic view of a transverse cross section AA' of the seam of the airbag of Embodiment 1 of the present invention.
[Fig. 3] Fig. 3 is a schematic plan view of the seam of Embodiment 1 of the present invention when the airbag inflates.
[Fig. 4] Fig. 4 is a schematic view of a transverse cross section of the seam of Embodiment 1 of the present invention when the airbag inflates.
[Fig. 5] Fig. 5 is a schematic plan view of a seam of an airbag of Embodiment 2 of the present invention.
[Fig. 6A] Fig. 6A is a schematic view 1 of a transverse cross section of the seam of the airbag of Embodiment 2 of the present invention.
[Fig. 6B] Fig. 6B is a schematic view 2 of a transverse cross section of the seam of the airbag of Embodiment 2 of the present invention.
[Fig. 7] Fig. 7 is an exemplary flow diagram of a manufacturing method of Embodiment 4 of the present invention.
[Fig. 8] Fig. 8 is a schematic plan view illustrating an example of the end of a first base fabric penetration step of an airbag of Embodiment 5 of the present invention.
[Fig. 9] Fig. 9 is a schematic view of a transverse cross section illustrating an example of the end of the first base fabric penetration step of the airbag of Embodiment 5 of the present invention.
[Fig. 10] Fig. 10 is a schematic plan view illustrating an example of the end of a second base fabric penetration step of the airbag of Embodiment 5 of the present invention.
[Fig. 11] Fig. 11 is a schematic view of a transverse cross section illustrating an example of the end of the second base fabric penetration step of the airbag of Embodiment 5 of the present invention.
[Fig. 12] Fig. 12 is a schematic plan view illustrating an example before the start of a second base fabric penetration step of an airbag of Embodiment 6 of the present invention.
[Fig. 13] Fig. 13 is a schematic view of a transverse cross section illustrating an example before the start of the second base fabric penetration step of the airbag of Embodiment 6 of the present invention.
[Fig. 14] Fig. 14 is a schematic plan view illustrating a seam of an airbag of Embodiment 7 of the present invention.
[Fig. 15] Fig. 15 is a schematic view of a longitudinal cross section illustrating the seam of the airbag of Embodiment 7 of the present invention.
[Fig. 16] Fig. 16 is a schematic view of a transverse cross section of the seam of the airbag of Embodiment 7 of the present invention after penetration of a binding material.
[Fig. 17] Fig. 17 is a schematic view illustrating an example of a structure of sewing thread according to the present invention.
[Fig. 18] Fig. 18 is a schematic view illustrating an example of a cross-sectional structure of the sewing thread according to the present invention.
[Fig. 19] Fig. 19 is a graph showing change in an internal pressure of the airbag over time during inflation.
[Fig. 20] Fig. 20 is a graph showing the relationship between viscosity of the binding material during application and gas retention within the airbag according to the present invention.
[Fig. 21] Fig. 21 is a schematic view illustrating curing of the binding material in the present invention.
[Fig. 22] Fig. 22 is a schematic view illustrating an example in which the binding material is applied in advance to the sewing thread according to the present invention.
[Fig. 23] Fig. 23 is a schematic view illustrating dimensions of the binding material according to the present invention after curing.
[Fig. 24] Fig. 24 is an illustration of common types of airbags for passenger cars.
[Fig. 25] Fig. 25 is a schematic plan view of a seam according to a second embodiment of the present invention.
[Fig. 26] Fig. 26 is a schematic view of a longitudinal cross section of the seam according to the second embodiment of the present invention.
[Fig. 27] Fig. 27 is a surface SEM photograph in a vicinity of the sewing thread of a base fabric surface to which the binding material has been applied.
[Fig. 28] Fig. 28 is a surface SEM photograph in a vicinity of the sewing thread of a base fabric surface on a side to which the binding material has not been applied.
[Fig. 29] Fig. 29 is a cross-sectional SEM photograph of a sewing hole area to which the binding material has been applied on one side from an upper base fabric.
[Fig. 30] Fig. 30 is an exemplary flow diagram of a manufacturing method of Embodiment 13 of the present invention.
[Fig. 31] Fig. 31 is an exemplary flow diagram of a manufacturing method of Embodiment 14 of the present invention.
[Fig. 32] Fig. 32 is a schematic view of a longitudinal cross section of a vicinity of a seam hole along a direction of a seam of Embodiment 14 of the present invention. Description of Embodiments

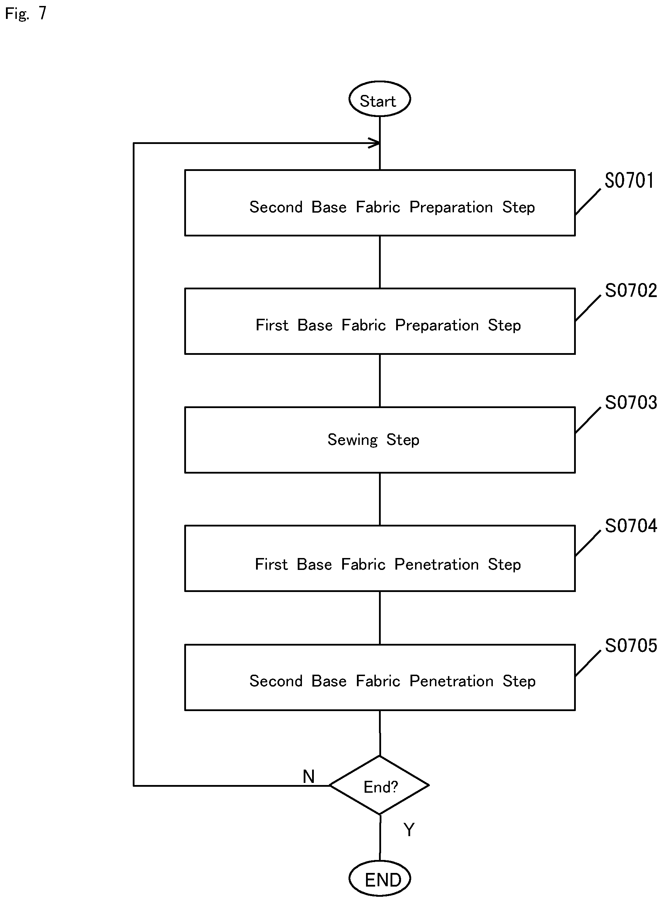

Hereinafter, examples of the present invention will be described. It should be noted that the present invention should not be limited to these examples at all and can be implemented in various forms without departing from the spirit of the present invention. Reference symbols in the description of the configuration and the explanatory diagrams of the configuration of the present invention in this specification are expressed by fourdigit numbers, with the first two digits representing the number of the figure and and the last two digits representing a number uniquely assigned to each part. It should be noted that the symbols indicating operation steps in the diagram illustrating the flow of processing in Fig. 7 are assigned in the order of the processing, regardless of the aforementioned method of assigning the symbols.

### <Airbag: Structure>

An airbag consists of an inflator (mostly one that burns gunpowder) for generating gas that inflates the bag body, an acceleration sensor for detecting collisions, a control circuit, a bag body, a rotary connector (only for the driver's seat), and the like. In this specification, the bag body of the airbag is referred to as an airbag in the narrow sense.

### <Airbag: Type>

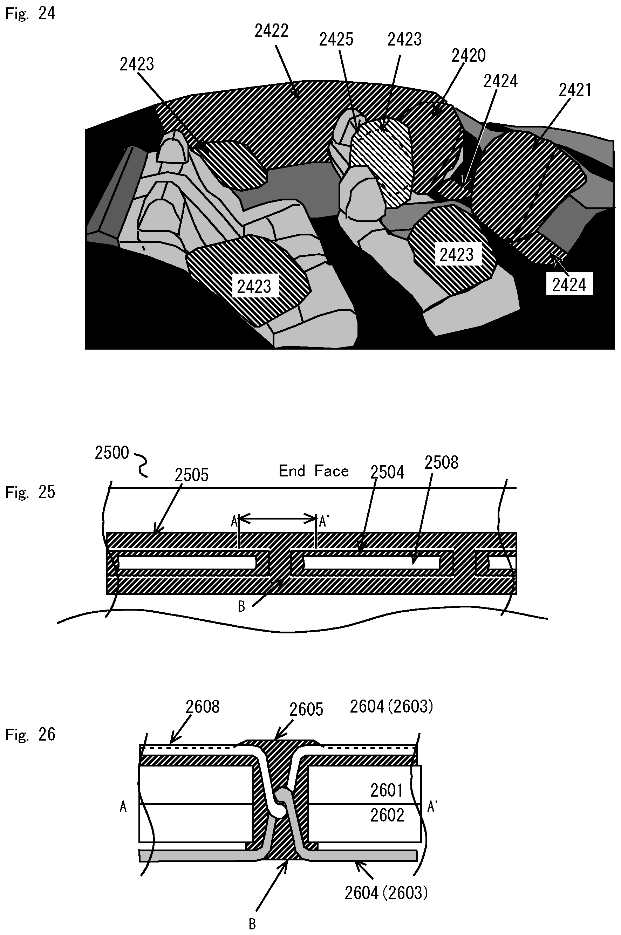

Airbags are used in various vehicles, but the most familiar airbag is the airbag for passenger cars. Fig. 24 is a diagram illustrating an example of an airbag installed in an automobile cabin. Various airbags are installed in the cabin, including: a driver's seat airbag (2420) which is housed in a steering wheel area of the driver's seat and protects the head and chest of the driver in the event of a frontal collision; a passenger seat airbag (2421) which is housed in a dashboard area on the side of the passenger seat and protects the head and chest of an occupant of the passenger seat in the event of a frontal collision; a side curtain airbag (2422) which is mounted above an opening for a door and deployed to cover a window in order to protect the head and neck of an occupant of the passenger seat or rear seats in the event of a side collision or vehicle rollover; a side airbag (2423) which is housed on the left and right sides of a seat and protects the chest and abdomen of occupants of the driver's seat and the passenger seat or rear seats at the event of a side collision; and a knee airbag (2424) which protects the legs of occupants and reduces the impact on their knees. A center airbag (2425) is arranged between the driver's seat and the passenger seat. This is an airbag which prevents collisions between the driver and the occupant of the passenger seat and prevents the head from coming into contact with the interior such as a door on the side opposite to the collision side (the non-collision side).

Among them, the driver's seat airbag (2420) and the passenger seat airbag (2421) have a large capacity when inflated, and the passenger will hit them in the event of an accident so that if they remain inflated, the passenger will collide with the airbag and get damaged. Therefore, since these airbags for front seats have to deflate as the inflation gas escapes as soon as they inflate and absorb the forward inertia of the occupant to weaken it, they are also provided with a gas release valve. Of the remaining airbags, the side curtain airbag (2423) inflates between the occupant and a window in the event of a side collision in order to prevent the occupant from coming into contact with the window, being injured by contact with the shattered window or the outside of the vehicle, or being thrown from the vehicle. Therefore, it has to remain inflated for a longer period, such as for several seconds (e.g., 6 seconds or more), than the driver's seat airbag or passenger seat airbag. The center airbag is also deployed for protecting the occupants in the event of a side collision and has to remain inflated for a long period, though not as long as the side curtain airbag. In addition, although not shown in Fig. 24, a pedestrian protection airbag, which is deployed on the hood, has to remain inflated for a certain period without actively releasing the gas. Thus, since these airbags are preferably less likely to release the inflation gas, they are suitable for application of the airbag or manufacturing method of the present invention.

### <Embodiment 1>

### <Embodiment 1 Overview> Mainly Corresponding to Claim 1

The airbag according to this embodiment consists of a sheet-like first base fabric, a sheet-like second base fabric, and a sewing thread for sewing them together, and the sewing thread is configured such that at least some of fibers are bound by a binding material.

### <Embodiment 1 Configuration>

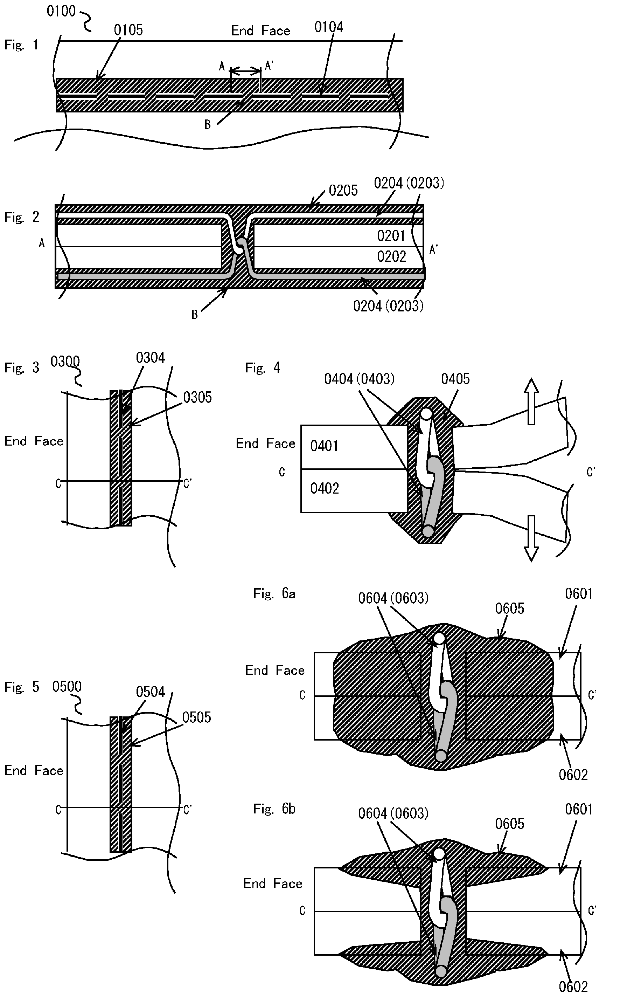

A configuration of Embodiment 1 will be described using Figs. 1 and 2. Fig. 1 is a schematic plan view of one seam of the airbag (0100), observed from the direction normal to a base fabric surface. The sewing thread (0104) constituting the seam, and the binding material (0105) covering the upper surface and both sides of the sewing thread (0104) are shown. The reason why the sewing thread (0104) appears discontinuous is that the sewing thread (0104) on the observed side surface is pulled by the sewing thread (0104) on the back side and forms a sewing hole making it invisible from the base fabric surface on the observed side surface. Portions indicated as the sewing thread (0104) by bold solid lines in Fig. 1 do not represent the sewing thread (0104) being directly exposed on the observed surface of the airbag (0100), but represent portions where, as shown in Fig. 2, the binding material (0205) covers the upper surface of the sewing thread (0204). If the binding material is transparent, the sewing thread can be visually observed in these portions.

### <Embodiment 1 General Structure of Seam: Plan View>

Fig. 1 is a schematic plan view of the seam in which base fabrics of the airbag are sewn together of Embodiment 1. In this figure, the upper horizontal solid line represents an end face of the airbag, and the wavy lines on the left, right, and bottom indicate that the continuum beyond them has been omitted. A similar representation to that in Fig. 1 is used in Figs. 3, 5, 8, 10, 12, 14, and 25 used in the description of other embodiments later. It should be noted that, in the figures of this specification, the seam at the end of the airbag is shown as being located at the end, but the location is not limited to the end, and the seam located on the inside of the base fabric, in a position to sandwich other seams between itself and the end, or the like can also be encompassed by the present invention.

### <Embodiment 1 General Structure of Seam: Longitudinal Cross-Sectional View>

Fig. 2 is a schematic longitudinal cross-sectional view of a sewing hole area, which is the vicinity of a sewing hole, along the sewing thread (0104) in a portion of the seam indicated by A-A' in Fig. 1. A portion indicated by B in Fig. 1 is a portion where the binding material covers the sewing hole, in which the sewing thread on the observed surface of the airbag is pulled by the sewing thread on the back side and made invisible in Fig. 1. In the following description in this specification including Fig. 1, only one seam is illustrated. However, the seam of the airbag may also be configured with multiple seams running parallel to each other. In addition, Fig. 2 shows a binding material (0205) completely covering a sewing thread (0204) on a base fabric surface. However, at least a portion of the sewing thread may be exposed from the binding material. Furthermore, the thickness of the binding material (0205) on a surface side of a upper first base fabric (0201) or a lower second base fabric (0202) shown in Fig. 2 may be different.

Fig. 2 is a schematic view of a longitudinal cross section along the seam of the airbag. The seam of the airbag consists of the first base fabric (0201), the second base fabric (0202), fibers (0203) constituting the sewing thread, the sewing thread (0204) made by bundling multiple fibers (0203), and the binding material (0205). To distinguish between the sewing thread corresponding to the upper thread and the sewing thread corresponding to the lower thread when sewing with a sewing machine or the like, Fig. 2 illustrates the sewing threads in white and light gray. In practice, sewing threads of the same color may be used, or the colors may be changed intentionally (the same applies hereinafter).

### <Embodiment 1 First Base Fabric (0201), Second Base Fabric (0202)>

The "first base fabric" (0201) and the "second base fabric" (0202) have a sheet-like shape, and the first base fabric (0201) and the second base fabric (0202) are sewn together to form a bag body for forming a gas injection space.

The "first base fabric" which is the first base fabric, and the "second base fabric" which is the second base fabric are constructed in a sheet-like shape, respectively. The base fabrics may be a woven fabric made by weaving yarn, a knitted fabric, a nonwoven fabric, a sheet made by thinly stretching synthetic resin into a film, or the like, and can be selected as appropriate according to the desired performance.

### <Embodiment 1 First Base Fabric / Second Base Fabric: Material of Base Fabric>

The bag body of the airbag formed by sewing the first base fabric and the second base fabric together is inflated by the gas produced by burning gunpowder in the inflator. Therefore, the first base fabric and the second base fabric constituting the airbag need to be made of a material that can withstand the instantaneous high temperature and the rapid expansion caused by the high pressure gas, has enough strength not to tear from the impact of contact with occupants, while being as soft as possible to accommodate the occupants. If the both base fabrics are woven fabrics, the airbag may use fabrics known to be used for airbags such as nylon, polyethylene terephthalate, or polyester. If the base fabric is a woven fabric, a coated fabric with silicone resin or urethane resin applied to the surface (often applied to one side of each base fabric), or a uncoated fabric without the application can be used. The coated fabric may be configured so that the coated surface of the bag body is on the outside or on the inside of the bag body. The combination of the resin used for the coating (such as silicone resin or urethane resin) and the binding material described later can be selected as appropriate depending on the adhesive strength between the two.

The presence or absence of the coating on the fabric and thread density of the fabric affects how the inflation gas escapes from the inflated airbag, so these can be selected as appropriate depending on the type and required specifications of the airbag to be used. The non-coated fabric is used for an airbag which has a large bag body, accommodates a large amount of the inflation gas, and has a vent hole for deflating by releasing gas after inflation, such as the airbags for the driver's seat or passenger seat, and the coated fabric is selected for the side curtain airbag or the like which is thin and cannot be provided with a vent hole, and which has to maintain a small amount of gas for a relatively long period. The presence or absence of the coating on the fabric, the fabric density, or the material of the fabric may be varied between the first base fabric and the second base fabric. This can be selected as appropriate depending on the design of how the airbag inflates and deflates.

### <Embodiment 1 First Base Fabric / Second Base Fabric: Base Fabric Constituting Airbag>

In the description of the present application, the first base fabric and the second base fabric are illustrated as being composed of one piece, respectively. However, they may be composed of multiple pieces, respectively (for example: a long and narrow tapeshaped fabric may be applied near the seam and then sewn over it for reinforcement; nearly identical pieces of fabric may be overlapped to form one of the base fabrics; or the like). In addition, one base fabric may be composed of one piece, and another base fabric may be composed of multiple pieces. The first base fabric or the second base fabric may be a single sheet-like base fabric, respectively, or may be formed by joining multiple sheet-like base fabrics together, respectively. When it is formed by joining together, sheet-like base fabrics of different materials may be joined together rather than sheet-like base fabrics of the same material. Furthermore, the bag body of the airbag may be configured to be a three-dimensional shape formed by sewing the base fabrics of different shapes together, rather than a shape formed by overlapping and sewing together the first base fabric and second base fabric of substantially the same shape. It may have a column-like shape consisting of an upper surface, a bottom surface, and a side surface, or a mushroom-cap-like shape (a hamburger-bun-shape) formed by three-dimensionally sewing fabrics of different shapes together. In the seam, basically the two base fabrics, i.e., the sheet-like first base fabric and the sheet-like second base fabric are sewn together. However, depending on the structural design of the airbag, cases where more than two types of sheet-like base fabric are sewn together can also be within the scope of the present invention.

### <Embodiment 1 Sewing Thread (0204)>

The sewing thread (0204) shown in Fig. 2 is constructed by twisting multiple fibers (0203) together and is used to sew the first base fabric and the second base fabric together. In addition, at least some of the fibers of the sewing thread are bound by the binding material described later so that a gap is less likely to be formed between the sewing thread and the base fabric in the sewing hole area as a result of twist of the fibers of the sewing thread tightening by tension generated in the sewing thread.

### <Embodiment 1 Sewing Thread (0204): Structure>

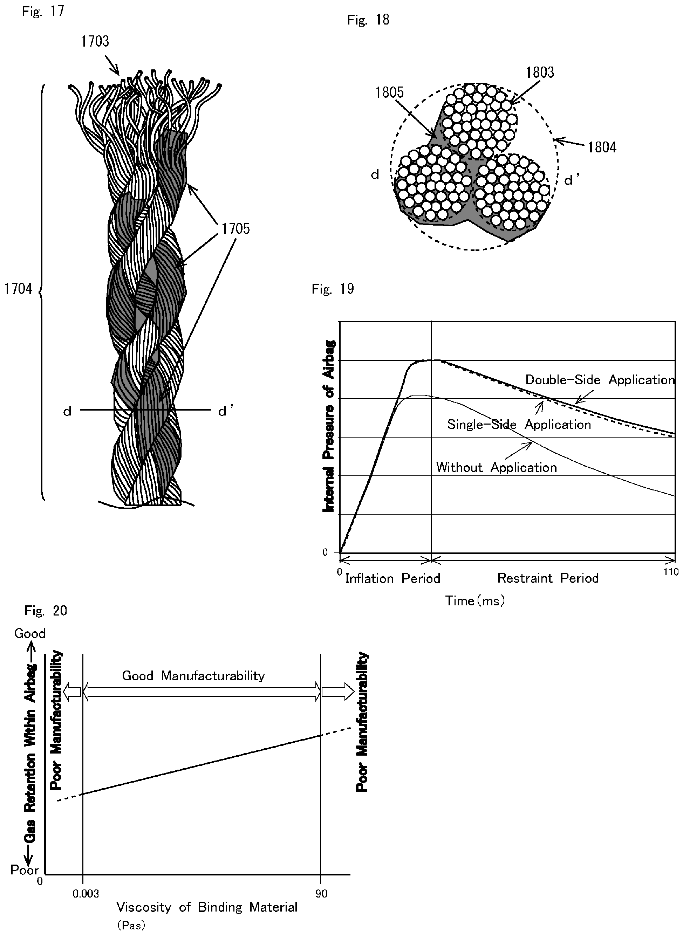

Fig. 17 is a schematic view illustrating an example of a structure of the sewing thread. To make the structure easier to understand, the sewing thread shown in the schematic view of Fig. 17 has its upper twist unraveled. The sewing thread of the example in Fig. 17 is a sewing thread (1704) which is a large-diameter twisted thread made by twisting fibers (1703), which are a single fiber respectively, into a single S-twist to make a small-diameter twisted thread and then twisting three of the small-diameter twisted threads into a plied Z-twist. The S-twist and Z-twist refer to classifications of the twist direction of threads. If the direction of fibers constituting the small-diameter twisted thread (or small-diameter twisted thread constituting the large-diameter twisted thread) viewed from the side is oriented upwards to the left, it is called the S-twist, and if the direction is oriented upwards to the right, it is called the Z-twist. However, the above-described twisting process is just one example, and any thread that has undergo any kind of twisting process falls under the sewing thread as defined in the present invention. In the example shown in Fig. 17, the binding material (1705) shown in gray penetrates into some parts of the sewing thread (1704), and at least some of the fibers (1703), which are single fibers, are bound by the binding material, making them less likely to shift relative to each other. In addition, not only the fibers (1703), which are single fibers, but also at least some of the three small-diameter twisted threads made by twisting the single fibers, are bound by the binding material (1705), making the three small-diameter twisted threads less likely to shift relative to each other.

Fig. 18 is a schematic view illustrating a transverse cross section of a part d-d' in Fig. 17. Small circles represent the fibers (1803), which are single fibers. The three groups of multiple (42 each) fibers surrounded by circular dot lines represent the above-described small-diameter twisted threads, and a circular dot line surrounding the three small-diameter twisted threads represents the sewing thread (1804), which is a large-diameter twisted thread. The binding material (1805) binds at least some of the fibers (1803) with each other, and at least some of the small-diameter twisted threads with each other. It should be noted that Fig. 2 above does not show the binding material (0205) penetrating between at least some of the fibers (0203) of the sewing thread (0204). Hereinafter, not shown in the figures in this specification unless otherwise specified, the sewing thread is assumed such that the binding agent penetrates and binds between at least some of the fibers constituting the sewing thread, making them less likely to shift relative to each other.

### <Embodiment 1 Sewing Thread (0204): Effect of Binding Material>

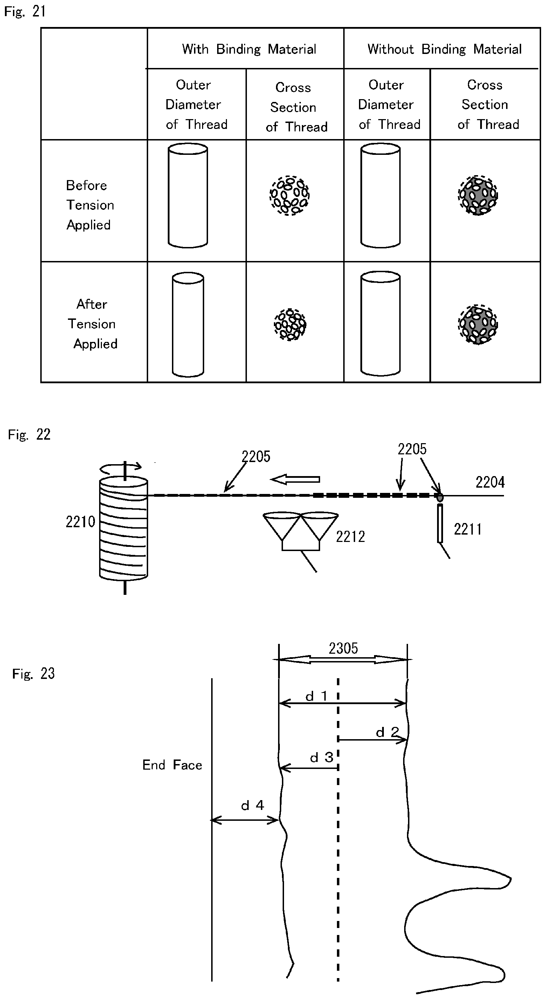

By the presence of the binding material (1705) between the fibers (1703), if tension is applied, in addition to the tension during sewing, to the sewing thread (1704) during inflation of the airbag so that the twist tightens, the binding material fixes the fibers (1703) or/and the small-diameter twisted threads, making them less likely to shift relative to each other. Therefore, the distance between adjacent fibers (1703) or adjacent small-diameter twisted threads does not decrease, so the diameter of the sewing thread is not reduced. This will be explained using the table in Fig. 21. In Fig. 21, the left column shows the sewing thread without penetration of the binding material, the right side shows the sewing thread in which the binding material penetrates at least some of the fibers constituting the sewing thread, the upper row shows the state before the tension during inflation of the airbag is applied to the sewing thread, and the lower row shows the state after the tension during inflation of the airbag is applied. The left side of each field is a simplified representation of the general outer shape of the sewing thread and is a diagram to show the change in diameter. The right side of each field is a cross-sectional view showing an excerpt of some of the fibers constituting the sewing thread. The distance between the fibers constituting the sewing thread and the diameter of the sewing thread before the tension during inflation of the airbag is applied are substantially the same whether or not the binding material has penetrated. The transverse cross section of the twisted fibers is elliptical because the fibers are cut diagonally across them. In the sewing thread which the binding material has penetrated, at least some of the fibers are bound by the binding material.

When the tension during inflation of the airbag is applied, in the sewing thread to which the binding material has not penetrated in the lower left field, the fibers are pulled and shifted to each other, thereby the gap between the fibers being decreased. As a result, the angle of the fibers crossing the cross section shifts towards the vertical, causing the cross section to change from an ellipse to something closer to a circle. These factors contribute to a reduction in the diameter of the sewing thread. Under the condition in the lower right field that the tension during inflation of the airbag is further applied to the sewing thread which the binding material has penetrated at least partially, the fibers bound by the binding material are less likely to shift relative to each other, and thus the distance between the fibers does not change. Therefore, the cross section of the fibers crossing the cross section remains almost the same ellipse as before the tension was applied. These factors keep the thickness of the sewing thread almost unchanged compared to before the tension was applied. Therefore, a gap is not formed between the sewing thread and the base fabric in the sewing hole area, preventing leakage of the inflation gas during inflation of the airbag. As in the lower left field in Fig. 21 (the sewing thread without the binding material after the tension has been applied), if the binding material is not used, the diameter of the sewing thread (1704) decreases when the tension during inflation of the airbag is applied. Therefore, a gap is formed between the sewing thread and the sewing thread insertion cross section of the base fabric in the sewing hole area, resulting in leakage of the inflation gas during inflation of the airbag. Such leakage of the gas during inflation of the airbag can be prevented by allowing the binding material to penetrate between at least some of the fibers of the sewing thread.

### <Embodiment 1 Sewing Thread (0204): Material>

As the fibers (0203), fibers constituting known threads for sewing airbags can be used, such as polyamide fibers, polyester fibers, or biopolyester fibers. In particular, biopolyester fibers are expected to see increased adoption in response to the growing consumer awareness of environmental issues and the growing interest in the SDGs in recent years.

### <Embodiment 1 Sewing Thread (0204): Thickness, Fineness>

The diameter of the fibers can be appropriately selected depending on the required specifications of the thread constituting the seam. If the fiber diameter is thick, when used as the sewing thread, the number of the fibers constituting the sewing thread becomes small, resulting in a stiff thread that is difficult to sew with. Examples of suture specifications include a single filament fineness of 10 dtex or less and a total fineness of 200 to 3100 dtex, more preferably of 900 to 1800 dtex (130 to 210 fibers), which can be selected as appropriate. The sewing thread made by twisting multiple thin fibers together is preferable to the sewing thread made of a single fiber like a nylon fishing line because it is more flexible, easier to handle during sewing, and less likely to break due to flaws or the like. In case of a single fiber, if it gets flawed and the flaw spreads by tension applied to the thread or the like, the thread will break. However, if the thread is constituted of multiple fibers, it is less likely to break because it is supported by the fibers without flaws.

An example of the sewing thread has a configuration that 20 to 50 single fibers, which are nylon fibers with a diameter of 0.02 to 0.04 mm, are twisted together to form a small-diameter twisted threads with a diameter of about 0.1 to 0.3 mm, and then three of the small-diameter twisted threads are twisted together to form one large-diameter twisted thread (about 0.5 mm in diameter), i.e., the sewing thread (about 1000 dtex). The number of the small-diameter twisted threads are not limited to three, but it is preferable to use multiple threads. As the number thereof, a number of about 2 to 7 is preferable. Alternatively, the small-diameter twisted thread is not made, and a single thread may be formed by twisting 130 to 210 single fibers together. However, in this case, a binding material with lower viscosity has to be used in order to allow the binding material to penetrate to the center of the sewing thread. In this case, a binding material with viscosity of about 0.05 Pa·s to 2.0 Pa·s is suitable.

### <Embodiment 1 Sewing Thread (0204): Seam>

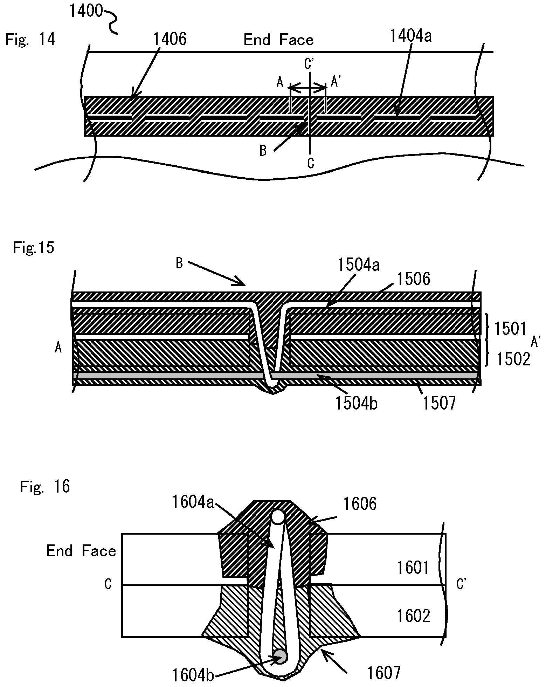

When sewing with a sewing machine, two kinds of threads, i.e., an upper thread and a lower thread are used. Here, they do not have to be the same, but the threads which are different in material and strength may be used depending on the purpose. If the seam is not up-down symmetrical in cross-sectional view as shown in Fig. 15, it is preferable that the thread to which tension is applied during the airbag inflation process has higher shear strength than the sewing thread on the other side. In the case of the sewing type shown in Fig. 15, higher tension is applied to the sewing thread (1504a) which is pulled into the seam during the airbag inflation process. Therefore, it is preferable that this sewing thread (1504a) has higher shear strength than the sewing thread (1504b) on the other side. To distinguish between the first base fabric side and the second base fabric side, and distinguish between the upper thread and the lower thread, the different colors, such as blue and red, may be used for the upper thread and the lower thread. Although only examples of straight sewing are shown in the figures of the present specification, other types of sewing may also be used.

### <Embodiment 1 Sewing Thread (0204): Seam: Multiple Rows>

Although the present specification illustrates and describes the case of a single row of the seam, it is possible to have more than one, i.e., multiple rows of the seams (this explanation of multiple rows also applies to other embodiments). When using sewing threads for sewing, a single row of the seam may be sufficient, but having multiple rows of the seams is preferable as it makes it easier to resist the force exerted during inflation of the airbag. When the seams are arranged in two rows, the force applied to stiches during inflation of the airbag can be almost entirely received by the seam on the inside of the airbag, thereby reducing the force applied to the outer seam and thus reducing leakage of inflation gas. More than two rows, such as three or more rows, of the seams may also be arranged. If the base fabrics are sewn together by forming more rows of the seams than the number of sewing needles in a sewing machine, the sewing can be done multiple times. The sewing can be done at once by using a sewing machine equipped with a number of needles corresponding to the number of the multiple rows of the seams. Increasing the number of the rows results in side effects such as increased manufacturing costs, increased weight of the airbag itself (due to an increase in the seam and a seam allowance section, which is an area of the binding material applied to the seam), and difficulty in folding. The number of the rows of the seams that maintain strength while minimizing the effects of side effects is three or less, and preferably two.

When arranging multiple rows of the seams, the distance between the rows of the seam (distance between the center lines of the seam) is 1 mm or more and 10 mm or less, preferably 7 mm or less, and more preferably 5 mm or less.

### <Embodiment 1 Sewing Thread (0204): Penetration of Binding Material>

At least some of the fibers of the sewing thread may be bound in advance by the binding material described later before the sewing thread is used for sewing the base fabrics together. Before winding the sewing thread onto a reel (2210) during manufacturing it as shown in Fig. 22, the binding material (2205) is applied to the sewing thread (2204) by, for example, repeating a process of intermittently applying it for a length of 1 mm from a discharging nozzle (2211) and leaving a gap of 0.5 mm without application of the binding material (2205), is allowed to penetrate between the fibers. Then, it is wound after being heated with an infrared lamp heater (2212) or the like to provide suitable curing and drying conditions for the binding material. In this way, the sewing thread in which the binding material has penetrated at least some of the fibers in advance can be manufactured. Alternatively, it may also be configured such that the binding material penetrates the sewing thread immediately before it is unwound and passes through the base fabrics during sewing the base fabrics together by using a sewing machine or the like. However, when the first base fabric and the second base fabric are sewn together, sewing tension (tension generated between the sewing threads, and tension based on a pressure applied by the base fabric) is applied to the free sewing thread. Therefore, it is preferable to perform the binding after the sewing tension has been applied. It should be noted that it takes a certain amount of time for these tensions to become constant after the sewing, and it is preferable to apply the binding material after the tensions have become constant. The time required for the tensions to become constat is 1 second or more and about 5 minutes or less. This time varies depending on the type of the sewing thread and the material of the base fabric.

### <Embodiment 1 Binding Material (0205)>

The binding material (0205) binds at least some of the fibers (0203) of the sewing thread (0204) so that a gap is less likely to be formed between the sewing thread and the base fabric in the sewing hole area as a result of the twist of it tightening by tension generated in the sewing thread (0204).

### <Embodiment 1 Binding Material: Material and Property>

The material of the binding material (0205) can be selected from resins such as silicone resin, polyvinyl chloride resin, urethane resin, polyurethane resin, or other elastomers. When the airbag is housed in a predetermined location within the vehicle's interior, such as a steering wheels, seats, pillars, or above side windows, the seam to which the binding material has been applied is also folded. Therefore, the material has to remain flexible even after the binding material has dried. The hardness after curing is preferably between 0 and 30, measured using a durometer type E or A as specified in JIS K6253-3. More preferably, it is from 5 to 20, and the range from 5 to 15 is desirable.

If the first base fabric or/and the second base fabric is a coated fabric, the binding material made of the same type as the coating material on the base fabric surface is preferable because it can be expected to increase the adhesive strength. For example, in the base fabric coated with silicone rubber, flame retardancy can be imparted to the silicone rubber itself by blending the silicone rubber with a known flame retardant. Therefore, when the basic fabric with such a configuration is used, it is preferable to use resins that are also silicone-rubber-based as the binding material. As other examples, when the coating agent of the base fabric is urethane-resin-based, it is preferable to use a binding material that is also urethane-resin-based; and when a polyvinyl-chloride-based resin is used as the coating agent, it is preferable to use a polyvinyl-chloride-based resin as the binding material.

In order to penetrate the fibers of the sewing thread with the binding material and bind the fibers, good adhesiveness with the fiber is required. Nylon fibers are less likely to adhere to an adhesive than polyester fibers. When a sewing thread constituted of nylon fibers is used, a silicone-resin-based material, urethane-resin-based material, or the like which can bond nylon must be selected as the binding material. Depending on the type of material constituting the sewing thread or/and base fabric (e.g., fibers, coating materials of the base fabric, materials for the film-like base fabric, etc.), a material with adhesive properties is selected as the binding material.

### <Embodiment 1 Binding Material: Application after Sewing>

Examples of methods for allowing the binding material (0205) to penetrate between the fibers of the sewing thread include: application of the binding material to the seam using a dispenser or syringe, screen printing, inkjet printing, and a brush after sewing the first base fabric (0201) and the second base fabric (0202) together by the sewing thread (0204). Examples of methods for applying the binding material include a method in which it is applied to the seam from a first base fabric side, dried, and then applied to the seam from an opposite second base fabric side. An alternative example is a single-side application method in which it is applied to the seam only from the first base fabric side. The binding material penetrates between fiber of the sewing thread exposed on the base fabric surface. In the seam, the binding material penetrates through holes on the seam, along the sewing thread (0204), and between the fibers (0203) constituting the sewing thread (0204). As a result, at least some of the fibers (0203) constituting the sewing thread (0204) are bound by the binding material (0205), making the fibers (0203) less likely to shift relative to each other or separate from each other. As the binding material penetrates between the fibers in this manner, a gap between the base fabric and the sewing thread (0204) in the seam is also filled by the binding material (0205). As described in the section of Effect of Binding Material in the above description of the sewing thread, the diameter of the sewing thread (0204) is not reduced even if tension is applied during inflation of the airbag, preventing a gap from being formed between the sewing thread and the base fabric in the sewing hole area.

Figs. 1 and 2 show the example in which the binding material (0205) is applied to the seam by the method as described above. However, as described in the above description of the sewing thread, it may be configured that the sewing thread (0204) to which the binding material (0205) has been applied in advance is used for sewing, and the binding material is not applied to the seam after the sewing.

### <Embodiment 1 Binding Material: Seam When Airbag Inflates>

The seam when the airbag inflates will be described using Figs. 3 and 4. Fig. 4 is a schematic plan view of a transverse cross section of the seam of the airbag, and Fig. 3 is a schematic plan view of the seam of the airbag illustrating a portion C-C' in the transverse cross section in Fig. 4. As shown in Fig. 4, the airbag is sandwiched by the first base fabric (0401) and the second base fabric (0402), and a space surrounded by the seam sewn by the sewing thread (0404) inflates with gas. In the seam, the first base fabric (0401) and the second base fabric (0402) on the inside of the seam tend to move away from each other as indicated by arrows in Fig. 4. Therefore, tension will be created which tends to stretch the sewing thread (0404) sewing the two base fabrics together. When force is applied to the sewing thread to stretch it, the twist of the thread tends to tighten and the diameter of the thread tends to be reduced. Then, in a case where the seam is formed only by sewing the base fabrics by the sewing thread in which at least some of the fibers are not bound by binding material, the sewing hole is almost completely filled with the sewing thread before inflation, but the tension during inflation of the airbag stretches and tightens the sewing thread, reducing the diameter of the sewing thread. As a result, a gap is formed between the fabric and the sewing thread in the sewing hole area, causing the inflation gas to leak out.

In the present invention, as shown in Fig. 4, the binding material penetrates between at least some of the fibers of the sewing thread (0404) in a sewing hole portion of the seam, and binds them together. As shown in Fig. 17, since the binding material (1705) penetrates between the fibers (1703) constituting the sewing thread (1704) or between the small-diameter twisted threads formed by twisting multiple fibers together and binds them together, the fibers are fixed so that the distance between the fibers or between the small-diameter twisted threads is not reduced, the twist does not tighten, and the diameter of the sewing thread is not reduced. Therefore, a gap is less likely to be formed between the sewing thread insertion cross section of the base fabric and the sewing thread in the sewing hole area. Since the gap is less likely to be formed in the sewing hole area, leakage of the inflation gas from the sewing hole is reduced. Also, the sewing thread is less likely to stretch. Furthermore, by entirely covering the seam by the binding material (0405) from both base fabric surfaces as in the example in Figs. 3 and 4, the seam becomes more rigid, reducing leakage of the gas from the sewing hole.

### <Embodiment 1 Binding Material: Application Area>

As shown in Fig. 23, the following conditions are preferable regarding: a width (d1) when the binding material (2305) is applied along the seam, a distance (d2) from the seam to an inner application edge, a distance (d3) from the seam to an outer application edge on a base fabric edge side, and a distance (d4) from the application edge on the side of the edge of the base fabric to the edge of the base fabric. It should be noted that the following applies when a single row of the seam is arranged. Since the binding material is generally applied along the seam and on the seam, it tends to spread almost symmetrically with respect to the seam. If the base fabric is wavy or not flat due to the sewing, it may be uneven. Therefore, if d1 is narrow, d2 and d3 tend to be small, and if d1 is large, d2 and d3 tend to be large. d1 is in the range of 3 to 30 mm, more preferably 5 to 20 mm, and most preferably 7 to 15 mm. d2 is 2 to 15 mm, more preferably 3 to 10 mm, and most preferably 4 to 8 mm. d3 is 1 to 15 mm, more preferably 2 to 10 mm, and most preferably 3 to 7 mm. d4 is 0 to 14 mm, preferably 5 to 13 mm, and more preferably 8 to 12 mm. The seam in the vicinity of the end of the base fabric is located 5 to 20 mm, preferably 10 to 15 mm, from the edge of the base fabric.

If there are multiple rows of the seams, the binding material may be applied to each seam (there may be gaps between the binding materials for each seam), or may be applied to cover the entire area of multiple rows of stitches. If there are multiple rows of the seams, d3 and d4 in Fig. 23 are refer to the distances from the seam that is closest to an end face of the base fabric, d2 refers to the distance from the seam that is furthest from the edge of the base fabric, and d1 is d1 = (sum of the intervals between multiple rows of the seams) + d2 + d3.

These dimensions may be taken at the maximum or minimum locations on an end face of the binding material, or at the average location on a wavy end face. If the width of the application area is too narrow, the sewing thread will not sufficiently fixed to the base fabric, so that the likelihood increases that, during inflation of the airbag, the interval between the sewing holes is narrowed due to the shift between the sewing thread and the base fabric, and thus the sewn base fabrics will separate, creating a pathway for gas leakage. If the width of the application area is too wide, the elasticity of the cured binding material may hinder the airbag from being folded and housed in the predetermined space. In addition, the base fabric during the airbag sewing and binding material application stages is made slightly larger than the final outer shape (for example, by about 10 to 20 mm), and then cut to the final outer shape after the binding material has been applied and dried. This can prevent the applied binding material before drying from spreading too much and spilling from the edge of the base fabric to adhere to a table of an application device, and also prevent the binding material which has adhered to the table from adhering in turn to unwanted locations during the current or subsequent airbag application operations.

Furthermore, depending on the conditions, such as flatness, of the bag body during application, the binding material (2305) immediately after application may slide and spread over the surface of the bag body, spreading out like horns as shown in the lower right of Fig. 23. Such horn-like portions occur and form randomly and intermittently. Their formation improves the adhesive strength between the binding material and the base fabric after curing and can increase the strength of the fabric constituting the base fabric of the seam in the vicinity of the seam. If the overall application width of the binding material itself is increased, there is a concern that the flexibility of the bag body of the airbag may be impaired due to the elasticity of the binding material. Therefore, it is desirable to balance the strength and the flexibility by providing the horn-like portions rather than widening the overall width. The intentional formation of the horn-like portions can also be achieved by: locally increasing or decreasing a dispense amount of the binding material; increasing or decreasing tension of the thread during sewing to create wavy texture in the bag body after sewing; raising the table on the end face side of the base fabric during application; or making the surface of the table under the application area wavy.

### <Embodiment 1 Effect>

The present invention has the effect that, by allowing the binding material to penetrate between at least some of the fibers constituting the sewing thread in the sewing hole area, it is possible to prevent the twist of the sewing thread from tightening during inflation of the airbag, thereby preventing the formation of a gap between the sewing thread insertion cross section of the base fabric in the sewing hole area, which prevents leakage of the inflation gas and results in the desired inflation of the airbag.

### <Embodiment 2>

### <Embodiment 2 Overview> Mainly Corresponding to Claim 2

The airbag of Embodiment 2 based on Embodiment 1 is configured such that at least a portion of the sewing thread is exposed from the binding material in an area other than the sewing hole area on at least one or more base fabrics among the first base fabric or the second base fabric.

### <Embodiment 2 Configuration>

The sewing thread of Embodiment 2 based on Embodiment 1 will be described using Figs. 25 and 26. Fig. 25 is a plan view of the seam viewed from the first base fabric side, and Fig. 26 is a cross-sectional view of a portion corresponding to A-A' in Fig. 25, showing the cross section centered on the sewing hole area indicated by B in Fig. 25. The portion B (portion at which the sewing thread is interrupted) in Fig. 25 is the sewing hole area, where the sewing thread on the first base fabric side is pulled into the sewing hole by the sewing thread on the second base fabric side and is no longer visible from the first base fabric side.

The binding material (2505) is applied along the sewing thread (2504) visible on the first base fabric surface in Fig. 25. If an application amount of the binding material is not sufficient to cover the sewing thread, at least a portion of the sewing thread (portion indicated by (2608) in the figures) is exposed from the binding material, as shown in Figs. 25 and 26. In the sewing hole area, as shown in Fig. 26, the threads on both base fabric sides are pulled into the sewing hole by the opposite thread, respectively. Therefore, the sewing threads pulled into the sewing hole area and the sewing threads in the vicinity of the sewing hole area are covered with the binding material. Fig. 26 shows a case where the amount of the binding material on the first base fabric (2601) is large and the amount of the binding material on the second base fabric (2602) side is small. The binding material is applied at a dispense amount that minimizes seepage of it to the opposite side of the side to which it is applied. If the application is performed with an amount at which at least a portion of the sewing thread on the opposite base fabric side of the application side is exposed, the likelihood can be reduced that, when the binding material is applied while the bag body is placed on a table, the binding material penetrates along the sewing thread and through the sewing hole in the seam on the base fabric and adheres to the table surface before the application to the surface to which the binding material has been applied is completed.

The application amount of the binding material is not the only thing to consider. In the case of single-side application, the binding material has to penetrate through the sewing hole area and then between the fibers constituting the sewing thread on the opposite side. Therefore, the binding material is selected which has viscosity not too high to cover the entire sewing thread on the side of the base fabric to which it has been applied, and not too low to cover the entire sewing thread on the base fabric opposite to the base fabric to which it has been applied. The viscosity range of the binding material in the case of double-side application will be described in Embodiment 15 later. The viscosity range of the binding material in the case of single-side application will be described in Embodiment 16 later.

### <Embodiment 2 Effect>

In the airbag of Embodiment 2, if the application is performed with an amount at which at least a portion of the sewing thread on the opposite base fabric side of the application side is exposed, the likelihood can be reduced that, when the binding material is applied on a table, the binding material penetrates along the sewing thread and through the sewing hole in the seam on the base fabric and adheres to the table surface before the application to the surface to which the binding material has been applied is completed.

### <Embodiment 3>

### <Embodiment 3 Overview> Mainly Corresponding to Claim 3

The airbag of Embodiment 3 based on Embodiment 1 or Embodiment 2 is configured such that, in a region which is present on a base fabric surface of one base fabric on a side where the binding material has been applied to the seam and which runs along a sewing direction with a width approximately equal to a thickness of the sewing thread, a two-dimensional ratio of an area of the sewing thread exposed from the binding material at least partially is larger than 0% and smaller than or equal to 30%.

### <Embodiment 3 Configuration>

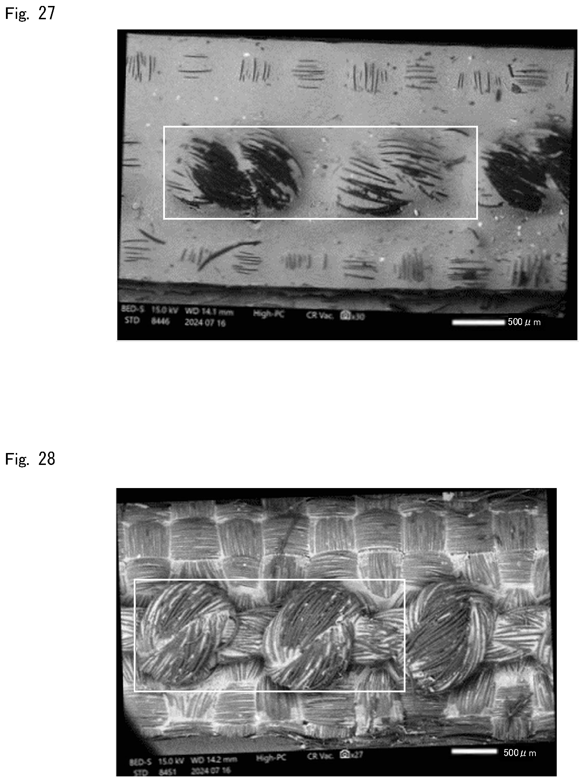

Fig. 27 is a surface SEM photograph in which the vicinity of the sewing thread of a base fabric surface to which the binding material has been applied is observed. In the photograph in Fig. 27, the white areas adhering to the fibers constituting the sewing thread or woven fabrics of the base fabric represent the binding material. In the SEM photographs in Fig. 27 and Figs. 28-30, which will be used in the description of the embodiments later, the sewing thread on the base fabric on the side to which the binding material has been applied and the sewing thread on the side to which the binding material has not been applied have the same specifications. The threads made by using nylon fibers and further twisting three small-diameter twisted threads together are used.

### <Embodiment 3 Exposed Area Ratio of Sewing Thread from Binding Material>

Within an area of substantially the same width as the thickness of the sewing thread captured in the surface SEM photograph, the area ratio of the white portion, which represents the binding material, was determined. The area ratio was obtained by placing on the image of the sewing thread a rectangular frame (white frame in Fig. 27) with substantially the same width as the width of the sewing thread and similar length to a pitch of the seam, and then dividing the area (number of pixels) obtained by subtracting the area (number of pixels) of the binding material within the frame from the area (number of pixels) of the frame by the area (number of pixels) of the frame. In the example shown in Fig. 27, the area ratio of the binding material was 25.6%.

When the binding material is applied from only one base fabric, the two-dimensional area ratio of the sewing thread at least partially exposed from the binding material on the base fabric to which the binding material has been applied is 0% or more and 30% or less. To prevent leakage of gas from the seam during inflation of the airbag, at least some of fibers constituting the sewing thread must be bound by the binding material. Therefore, the area ratio must be less than 100%. Furthermore, if the application amount of the binding material is such that more than 30% of the sewing thread is exposed, there is a problem that the binding material is less likely to penetrate between the fibers of the sewing thread on the opposite base fabric side. Therefore, the area ratio must be 30% or less. It should be noted that the fact that the area of the sewing thread exposed from the binding material on the base fabric surface on the side to which the binding material has been applied is 0% represents that the sewing thread is entirely covered with the binding material.

### <Embodiment 3 Effect>

According to Embodiment 3, by specifying the range of the two-dimensional area ratio of the sewing thread exposed from the binding material on the base fabric to which the binding material has been applied on a single side, the airbag can be obtained in which the binding material penetrates between the fibers of the sewing thread on the base fabric opposite to the side to which the binding material has been applied.

### <Embodiment 4 Overview>

The airbag of Embodiment 4 based on any one of Embodiments 1 to 3 is configured such that, in a region which is present on a base fabric surface of one base fabric of the base fabrics on a side where the binding material has not been applied to the seam and which runs along the sewing direction with a width approximately equal to the sewing thread (which may include the sewing thread from the opposite base fabric), a two-dimensional ratio of an area covered with the binding material (including both of the sewing thread and the base fabric) is 5% or more.

### <Embodiment 4 Configuration>

Fig. 28 is a surface SEM photograph in which the vicinity of the sewing thread of a base fabric surface to which the binding material has not been applied is observed. In the photograph in Fig. 28, the white areas adhering to the fibers constituting the sewing thread or woven fabrics of the base fabric represent the binding material. In the sewing hole area shown in Fig. 28, the sewing thread pulled out from the base fabric on the opposite side can be observed.

### <Embodiment 4 Ratio of Area of Sewing Thread Covered with Binding Material>

Within an area of substantially the same width as the thickness of the sewing thread (including the sewing thread from the opposite base fabric) captured in the surface SEM photograph, the area ratio of the white portion, which represents the binding material, was determined. Therefore, the area (number of pixels) of the binding material adhering to the base fabric surface in the vicinity of the sewing thread is also partially included. The area ratio was obtained by placing on the image of the sewing thread a rectangular frame (white frame in Fig. 28) with substantially the same width as the width of the sewing thread including the sewing thread from the opposite base fabric and similar length to the pitch of the seam, and then dividing the area (number of pixels) of the binding material within the frame by the area (number of pixels) of the frame. In the example shown in Fig. 28, the area ratio of the binding material was 11.7%.

When the binding material is applied from only one side, the two-dimensional area ratio of the sewing thread covered with the binding material on the base fabric opposite to the base fabric to which the binding material has been applied (the base fabric to which the binding material has not been applied) is 5% or more. If the penetration amount of the binding material is such that less than 5% of the sewing thread is covered with the binding material, there is a problem that the binding material is less likely to penetrate between the fibers of the sewing thread on the base fabric side to which the binding material has not been applied. If the binding material is less likely to penetrate, the binding material cannot completely bind the fibers constituting the sewing thread on the base fabric surface opposite to the base fabric to which the binding material has been applied so that the twist may tighten by the tension during inflation of the airbag.

The upper limit of the ratio of the area covered with the binding material is less than 100%. This is necessary for preventing the binding material from penetrating through the sewing hole area and along the sewing thread to adhere to the table surface on which the bag body is placed during the application before the application of the binding material is completed during the application operation of the binding material. It is preferably 80% or less, and more preferably 70% or less.

### <Embodiment 4 Effect>

According to Embodiment 4, by specifying the range of the two-dimensional area ratio of the sewing thread covered with the binding material on the base fabric to which the binding material has not been applied on a single side, the airbag can be obtained in which the binding material penetrates between the fibers of the sewing thread on the base fabric to which the binding material has not been applied.

### <Embodiment 5 Overview>

The airbag of Embodiment 5 based on any one of Embodiments 1 to 4 is configured such that the sewing thread on a side of the base fabric of the base fabrics on the side where the binding material is has been applied has a cross-sectional area of the binding material which is 10% or more and 25% or less of a cross-sectional area of the sewing thread (55% or more and 100% or less of a cross-sectional area of a part other than the fibers in the cross-sectional area of the sewing thread).

### <Embodiment 5 Configuration>

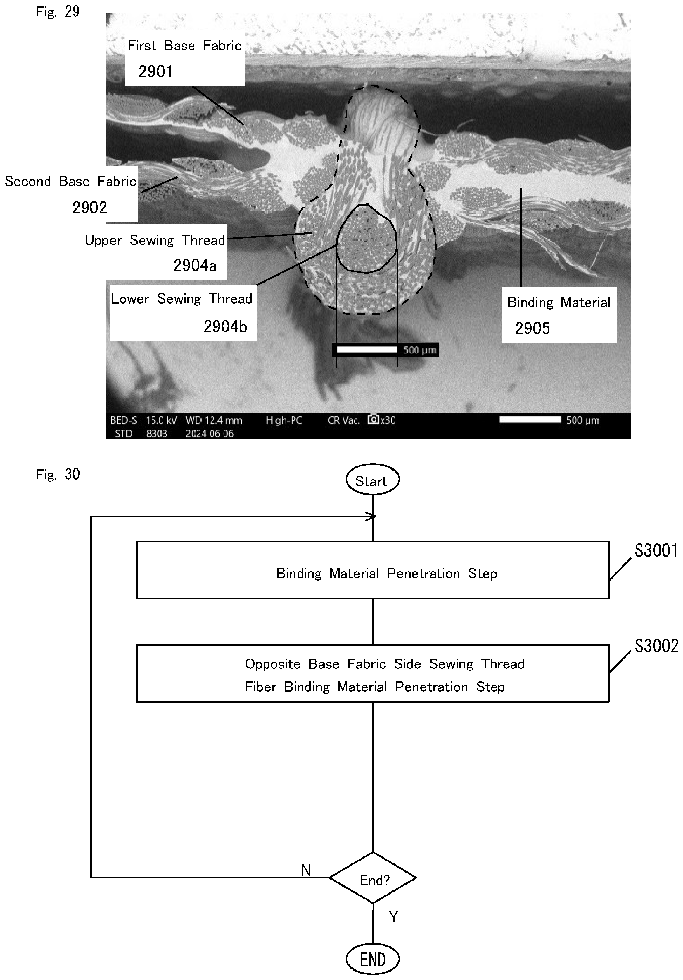

Fig. 29 is a cross-sectional SEM photograph of the sewing hole area to which the binding material has been applied on one side from an upper base fabric. The sewing thread on the upper base fabric is pulled by the sewing thread on a lower base fabric to the lower basic fabric side inside the sewing hole. In the photograph in Fig. 29, the white areas adhering between the sewing threads or between the base fabrics represent the binding material.

### <Embodiment 5 Binding Material Area Ratio within Cross Section of Sewing Thread>

The area ratio of the binding material was obtained relative to the cross-sectional area of the sewing thread on the upper base fabric (hereinafter referred to as an upper thread) shown in Fig. 29. It was obtained as a ratio of an area of the binding material within a cross sectional area of the upper thread (2904a) and the sewing thread on the lower base fabric (hereinafter referred to as a lower thread (2904b)) with a diameter of 500 µm shown in Fig. 29. The cross-sectional area of the binding material is 10% or more and 25% or less relative to the cross-sectional area of the upper thread (2904a), which is the sewing thread on the base fabric to which the binding material has been applied (55% or more and 100% or less relative to the cross-sectional area of a part other than the fibers in the cross-sectional area of the sewing thread (upper thread)). In the example of Fig. 29, the total cross-sectional area (number of pixels) of the binding material was 15.7% relative to the total cross-sectional area (number of pixels) of the fibers constituting the upper thread (2904a), and 65% relative to the cross-sectional area (number of pixels) of the part other than the fibers in the cross-sectional area of the upper thread (2904a). If it falls below the lower limit of the aforementioned range, it is insufficient to bind the fibers, and if it exceeds the upper limit, the binding material may spread from the base fabric side to which it has been applied, through the sewing hole and along the sewing thread, toward the opposite base fabric surface to which the binding material has not been applied, and the binding material may adhere to the table which is in contact with the lower base fabric surface.

### <Embodiment 5 Effect>

According to Embodiment 5, by specifying the ratio of the cross-sectional area of the binding material relative to the cross-sectional area of the sewing thread, the airbag can be obtained in which the binding material is sufficient to bind the fibers constituting the sewing thread while it does not widely seep to the base fabric opposite to the side to which it has been applied to adhere to the table.

### <Embodiment 6 Overview>

The airbag of Embodiment 6 based on any one of Embodiments 1 to 5 is configured such that the sewing thread on a side of the base fabric where the binding material has not been applied has a cross-sectional area of the binding material which is 5% or more and 25% or less of a cross-sectional area of the sewing thread (35% or more and 100% or less of a cross-sectional area of a part other than the fibers in the cross-sectional area of the sewing thread).

### <Embodiment 6 Configuration>

Fig. 29 is a cross-sectional SEM photograph of the sewing hole area to which the binding material has been applied on one side from the upper base fabric. The sewing thread on the lower base fabric pulls the sewing thread on the upper base fabric through the sewing hole to the lower base fabric side. In the photograph in Fig. 29, the white areas adhering between the sewing threads or between the base fabrics represent the binding material.

### <Embodiment 5 Binding Material Area Ratio within Cross Section of Sewing Thread>

The area ratio of the area of the binding material was obtained relative to the cross-sectional area of the sewing thread on the lower base fabric (hereinafter referred to as the lower thread) shown in Fig. 29. It was obtained as an area ratio of an area of the binding material within a cross sectional area of the upper thread (2904a) and the lower thread (2904b) with a diameter of 500 µm shown in Fig. 29. The total cross-sectional area of the binding material is 5% or more and 25% or less relative to the total cross-sectional area of the lower thread, which is the sewing thread on the base fabric to which the binding material has been applied (35% or more and 100% or less relative to the cross-sectional area of a part other than the fibers in the cross-sectional area of the sewing thread). In the example of Fig. 29, the area (number of pixels) of the binding material was 10.6% relative to the cross-sectional area (number of pixels) of the lower thread (2904b), and 44% relative to the cross-sectional area (number of pixels) of the part other than the fibers in the cross-sectional area of the lower thread (2904b). If it falls below the lower limit of the aforementioned range, it is insufficient to bind the fibers, and if it exceeds the upper limit, the binding material may adhere widely to the base fabric to which it has not been applied, and the binding material may adhere to the table which is in contact with the base fabric side (lower base fabric) to which it has not been applied.

### <Embodiment 6 Effect>

According to the airbag of Embodiment 6, by specifying the ratio of the cross-sectional area of the binding material relative to the cross-sectional area of the sewing thread, the binding material can be sufficient to bind the fibers constituting the sewing thread while it does not widely seep to the base fabric opposite to the side to which it has been applied to adhere to the table.

### <Embodiment 7>

### <Embodiment 7 Overview> Mainly Corresponding to Claim 7

Embodiment 7 based on Embodiment 1 is configured such that, when at least a portion of the seam of the first base fabric or/and the second base fabric is made of woven fabric, fibers constituting the woven fabric in the vicinity of the seam are bound by the binding material.

### <Embodiment 7 Configuration>

The sewing thread of Embodiment 7 based on Embodiment 1 will be described using Figs. 5, 6A, and 6B. Figs. 6A and 6B is schematic transverse cross-sectional views of the sewing hole portion, and Fig. 5 is a schematic plan view illustrating a location C-C' in the transverse cross section of the sewing hole in Fig. 6. The differences from Embodiment 1 will be described.

### <Embodiment 7 First Base Fabric (0601), Second Base Fabric (0602)>

It is configured such that, when at least a portion of the seam of the first base fabric or/and the second base fabric is made of woven fabric, the fibers in the vicinity of the seam among the fibers constituting woven fabrics of the first base fabric (0601) and the second base fabric (0602) are bound by the binding material so that they are less likely to unravel.

The phrase "when at least a portion of the seam of the first base fabric or/and the second base fabric is made of woven fabric" may include the following: both of the base fabrics are entirely made of woven fabric; the base fabrics have a configuration that at least a portion of the seam in nonwoven fabric is made of woven fabric; or the base fabrics have a configuration that, at least a portion of one resin film is made of woven fabric. Even if at least a portion of the seam of the both base fabrics is not woven fabric but nonwoven fabric or knitted fabric, a similar effect that the binding material prevents the fibers in the vicinity of the seam from unraveling can be obtained by binding the constituent fibers by the binding material.

### <Embodiment 7 Penetration of Binding Material into Woven Fabric Constituting Base Fabric>

Figs. 6A and 6B show an example constituted such that, after sewing the first base fabric (0601) and the second base fabric (0602) together, the binding material (0605) is applied to the vicinity of the seam including the sewing thread (0604) and allowed to penetrate between at least some of the fibers (0603) of the sewing thread (0604) and between the fibers constituting the woven fabric in the vicinity of the seam (the fibers are not shown in the figures) while the seam is covered with the binding material, and the sewing hole in the seam is filled with the binding material. Fig. 6A is a cross-sectional view when the binding material has completely penetrated into the woven fabric constituting the base fabric, and Fig. 6B is a cross-sectional view when it has penetrated only partway into the woven fabric constituting the base fabric. In Fig. 6A, it has completely penetrated into the base fabric, and a rigid structure is formed in which the both base fabrics are integrated in the area to which the binding material has been applied. Even when the binding material completely penetrates into the woven fabric constituting the base fabric as shown in Fig. 6A, if a base fabric with a coating agent applied to its inner face in advance is used, the coating agent can act as a stopper for the binding material, preventing it from being bonded with the woven fabric constituting the opposite base fabric by the binding material. As a result, the first base fabric and the second base fabric are joined only by the sewing thread and the binding material in the sewing hole area, resulting in an airbag that is easier to fold and more flexible than one where the base fabrics are bonded together. This also allows for more compact storage of the airbag. Depending on the specifications of the airbag, it is possible to choose whether to bond the base fabric in the seam to increase strength or to leave it unbonded for flexibility.

Alternatively, it may be configured such that the binding material is applied linearly to the locations to be sewn on each base fabric before sewing to allow the binding material to penetrate into the base fabrics, and then they are sewn together using the sewing thread (0604) in which the binding material has penetrated between at least some of the fibers to bind them.

In addition to the above method, the following may be considered: a method in which the binding material is applied in advance to the vicinity of the portion to be sewn of the first base fabric or/and the second base fabric before sewing, the fibers constituting the woven fabric constituting at least a portion of the seam of the base fabric are bound by the binding material, the base fabrics in that state are sewn together, and then the binding material (which may be a binding material made of a different material than the binding material applied to the base fabric) is applied to the seam again; or a method in which the binding material is allowed to thoroughly penetrate between fibers of the sewing thread in advance, and the binding material (which may be a binding material made of a different material than the binding material allowed to penetrate between the fibers constituting the sewing thread) is applied to the vicinity of the seam which is sewn using the sewing thread, thereby allowing the binding material to penetrate into the fibers constituting the woven fabric in the vicinity of the seam.

### <Embodiment 7 Effect>

According to the airbag of Embodiment 7, by binding the fibers constituting the woven fabric of the first base fabric or/and the second base fabric in the vicinity of the seam by the binding material so that the fibers are less likely to unravel, leakage of the airbag inflation gas from the seam can be further prevented.

### <Embodiment 8> Mainly Corresponding to Claim 8

### <Embodiment 8 Overview>

In Embodiment 8 based on Embodiment 1 or Embodiment 7, it is configured such that the binding material used for the sewing thread and the binding material used for the first base fabric or/and the second base fabric are the same binding material.

### <Embodiment 8 Configuration>

The airbag of Embodiment 8 based on Embodiment 1 or Embodiment 7 is configured such that the binding material used for the sewing thread and the binding material used for the first base fabric or/and the second base fabric are the same binding material. The configuration of Embodiment 8 will be described using Fig. 6 which has been used for the description of Embodiment 7.

### <Embodiment 8 Binding Material (0605)>

Regarding the binding material (0605), it is configured such that the binding material used for the sewing thread and the binding material used for the first base fabric or/and the second base fabric are the same binding material.

### <Embodiment 8 Binding Material: Same Material>

The binding material (0605) is allowed to penetrate into the fiber in the vicinity of the seam of the first base fabric (0601) or/and second base fabric (0602) so that they are less likely to unravel. Here, if the binding material (0605) of the same material type as the binding material (0605) allowed to penetrate between the fibers (0603) of the sewing thread (0604) is used, better adhesiveness can be obtained between the sewing thread and the base fabric than using a binding material of a different material type.

### <Embodiment 8 Binding Material: Effect of Using Same Material>

By using the binding material made of the same material for both the sewing thread and the base fabric, the adhesiveness between the binding material used for the sewing thread and the binding material used for the base fabric is improved, preventing the binding material having penetrated into them from peeling or shifting relative to each other due to the force exerted during inflation of the airbag. As a result, the following can be prevented during inflation of the airbag; leakage of the inflation gas in the vicinity of the sewing hole area due to the shift between the sewing thread (0604) and the base fabric in the seam or the further tension applied to the sewing thread; and the leakage of the inflation gas due to stress applied to the woven fabric constituting the base fabric in the vicinity of the seam, which causes the fibers to unravel or the arrangement of warp and weft threads constituting the woven fabric to shift, forming a gap in the base fabric. Reducing the leakage of the inflation gas makes it easier to achieve the target values for the reaction force characteristics (the force the occupant experiences from the airbag) during the design of the airbag, thus contributing to the airbag's intended purpose of protecting occupant safety in the event of an accident.

### <Embodiment 8 Binding Material: Application Method>

For example, the binding material can be applied from the first base fabric (0601) side after sewing so that it penetrates into the fibers constituting sewing thread (0604) and the fibers constituting the woven fabric of the base fabric in the vicinity of the seam, and after drying, the whole is turned over and it can be applied from the opposite second base fabric (0602) side in the same way, thereby applying it to the sewing thread (0604) and the base fabric simultaneously. The order of application to the first base fabric (0601) side and the second base fabric (0602) side may be reversed. The different binding materials may be used for the first base fabric (0601) side and the second base fabric (0602) side.

It should be noted that each of the first base fabric and the second base fabric, which are woven fabrics, may be coated in advance with resin which is to be used as the binding material, the fibers constituting the base fabrics may be bound by the binding material, and after sewing, the same resin as the resin used to coat the base fabrics may be applied as the binding material.

### <Embodiment 8 Binding Material: Penetration in Advance into Sewing Thread>

As described in Embodiment 1 using Fig. 22, the binding material may also be allowed to penetrate in advance into the sewing thread before sewing. In this case, it may also be configured such that the different binding materials (e.g., with different viscosities) are allowed to penetrate between at least some of the fibers of the upper thread and the lower thread, respectively, to bind them. It may also be configured such that, after sewing the first base fabric and the second base fabric together using the upper thread and lower thread described above, the same binding material as the binding material allowed to penetrate into the fibers of the upper thread is applied on the upper thread side on which the upper thread is visible everywhere except for the sewing holes, and is allowed to penetrate between the fibers constituting the woven fabric of the base fabric, while the same process is carried out on the lower thread side, that is, the binding material which has been allowed to penetrate between the fibers of the lower thread is allowed to penetrate between fibers constituting the woven fabric of the base fabric on the lower thread side. When using the different binding materials for the upper thread side and the lower thread side, it is advisable to select materials with similar primary properties, or to select binding materials with good adhesive compatibility between the two binding materials.

### <Embodiment 8 Effect>

According to the airbag of Embodiment 8, by using the same binding material for the binding material allowed to penetrate between the fibers of the sewing thread and the binding material allowed to penetrate between the fibers constituting the base fabric, the adhesiveness between the sewing thread and the base fabric is improved, reducing the shift of the seam during inflation of the airbag, thereby reducing leakage of the inflation gas,

### <Embodiment 9> Mainly Corresponding to Claim 9

### <Embodiment 9 Overview>

Embodiment 9 is a method for manufacturing the airbag according to any one of Embodiment 1, 7, or 8, including a first base fabric penetration step for allowing a binding material to penetrate from a seam of a first base fabric into a sewing thread, and a second base fabric penetration step for allowing a second binding material to penetrate from a seam of a second base fabric into the sewing thread. A manufacturing method in a case of double-side application will be described.

### <Embodiment 9 Manufacturing Method>

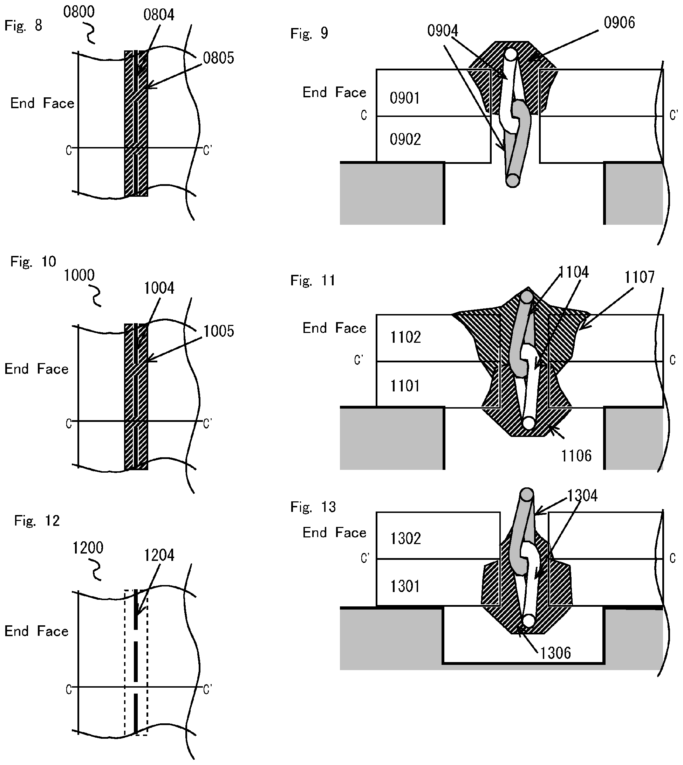

The method for manufacturing the airbag of Embodiment 9 will be described using: a flow diagram shown in Fig. 7; a schematic view of a transverse cross section of the sewing hole area C-C' after the first base fabric penetration step shown in Fig. 9; Fig. 8 showing a location C-C' of the transverse cross section in Fig. 9; a transverse cross-sectional view of the sewing hole area after the second base fabric penetration step shown in Fig. 11; and Fig. 10 showing a location C-C' of the transverse cross section in Fig. 11. The method for manufacturing the airbag of Embodiment 9 consists of: a second base fabric preparation step (S0701); a first base fabric preparation step (S0702); a sewing step (S0703); a first base fabric penetration step (S0704); and a second base fabric penetration step (S0705).

The second base fabric preparation step (S0701) involves a process of preparing a sheet-like second base fabric;
the first base fabric preparation step (S0702) involves a process of preparing a sheet-like first base fabric;
the sewing step (S0703) involves a process of sewing the first base fabric and the second base fabric together to form a gas injection space;
the first base fabric penetration step (S0704) involves a process of allowing a first binding material to penetrate from a seam of the first base fabric into a sewing thread; and
the second base fabric penetration step (S0705) involves a process of allowing a second binding material to penetrate from a seam of the second base fabric into the sewing thread.

If the penetration steps are repeated multiple times such as in a case where the penetration steps in which the binding material is divided or where the application is performed multiple times, it is also possible to configure the process to return to before the first base fabric penetration step (S0704) after the second base fabric penetration step (S0705).

This is the method for manufacturing the airbag, involving such a series of processes.

### <Embodiment 9: First Base Fabric Preparation Step / Second Base Fabric Preparation Step>

The second base fabric preparation step (S0701) is a step of preparing the sheet-like second base fabric for sewing with the first base fabric. The term "preparing" refers to: manufacturing the sheet-like second base fabric itself; cutting it to a size that can be handled by manufacturing equipment for sewing; or cutting it to the same dimensions as the product's outer shape or dimensions slightly larger than the product's outer shape; setting it in a predetermined location on the manufacturing equipment for sewing by the equipment (such as a loader section of the equipment, a starting position on a sewing table, or the like); etc. If the base fabric is coated fabric in the airbag's product form, the preparation process may include coating the individual second base fabric before sewing (including before cutting) with silicone resin, urethane resin, or the like. Starting up a sewing device and setting up the sewing thread may be included in "preparation." The content of the first base fabric preparation step (S0702) is the same as that of the second base fabric preparation step (S0701). In addition, the order of the first base fabric step and the second base fabric step may also be reversed.

For explanatory purposes, in the following description of the example, the base fabric into which the binding material first penetrates will be referred to as the first base fabric. The second base fabric is placed on a table of the sewing device, and then the first base fabric is placed over the second base fabric (the first base fabric preparation step / the second base fabric preparation step). For fabrics with distinct front and back sides (e.g., fabric with one side coated for the base fabric), the base fabric should be placed with the side that will be on the outside of the finished product in mind. This is because, after sewing them to form the bag body, there may be a process to turn the bag inside out. In this case, the fabric should be placed so that the side that will be on the inside of the finished bag body is on the outside when sewing. If the bag body will not be turned inside out after sewing, the fabric should be placed so that the side that will be on the outside of the bag body is on the outside when sewing.

If the bag body of the airbag is manufactured using a base fabric other than the first base fabric and the second base fabric, a preparation process for this base fabric is added. For example, when the bag body of the airbag is manufactured by sewing multiple base fabrics together in a three-dimensional manner, base fabrics of different shapes are prepared and sewn together. Therefore, the preparation step and the sewing step for these base fabrics are added and repeated as appropriate, depending on the type of the base fabrics. In the description of Embodiment 9, an airbag consisting of two base fabrics, i.e., the first base fabric and the second base fabric, which are substantially the same shape, is described as an example.

### <Embodiment 9: Sewing Step>

The Sewing step (S0703) is a process of sewing the first base fabric and the second base fabric together using the sewing thread in a predetermined sewing pattern. When sewing, it is common practice to use a sewing device such as a sewing machine and to use an upper thread and a lower thread for sewing. In the case of multiple rows (e.g., two rows) of the seams, by moving two needles on the sewing machine up and down simultaneously to form two parallel rows of the seams, it is easier to maintain a constant distance between the seams, and a stronger two-row sewing can be done in a single working time. It should be noted that, when sewing multiple rows, it is not necessary to sew all rows at once, but the multiple rows may be divided into one or more fewer rows and sewn separately.

### <Embodiment 9: First Base Fabric Penetration Step>

In the first base fabric penetration step (S0704), the first binding material is allowed to penetrate from the seam of the first base fabric into the sewing thread. The order in which the second base fabric penetration step and the first base fabric penetration step are performed can be set as appropriate for each product.

After the sewing step (S0703), the sewn bag body is moved from the sewing device to a table of an application device and set in a predetermined position. This setting operation may be included at the end of the sewing step. It is efficient to install the application device on the table continuous with a table of the sewing device, in an area that does not interfere with the sewing operation, and to slide the bag body across the table.

The first binding material is applied to the seam of the first base fabric and allowed to penetrate into the sewing thread. As shown in the schematic view of the transverse cross section of the sewing hole area in Fig. 9, the first binding material (0906) progresses from the first base fabric surface located above toward the second base fabric (0902) face directly above the table, while also penetrating between the fibers constituting the woven fabric of the first base fabric around the seam. It is preferable to select a material which dries quickly so that the drying of the first binding material (0906) (or polymerization of the resin constituting the first binding material (0906), or the like) progresses before it reaches the second base fabric surface. The location of the sewing hole area in Fig. 9 is C-C' shown in Fig. 8. After the first binding material surface has dried and is no longer sticky to the touch, the airbag formed by sewing the first base fabric and the second base fabric together is turned over and set so that the second base fabric (0902) is on top and the first base fabric (0901) is directly above the table. The operation of turning the airbag after the first binding material has penetrated from the first base fabric side may be performed at the beginning of the second base fabric penetration step.

### <Embodiment 9 Method for Applying Binding Material>

When applying the binding material in the first base fabric penetration step and the second base fabric penetration step described later, a dispenser or syringe which dispenses the binding material may be used, a printing method such as screen printing may be used, an inkjet method may be used, or it may be applied by a brush.

### <Embodiment 9: Second Base Fabric Penetration Step>

In the second base fabric penetration step (S0705) following the first base fabric penetration step, the second binding material is allowed to penetrate into the sewing thread in the seam of the second base fabric. It will be described using Fig. 11, which is a schematic view of the transverse cross section of the seam at the C-C' section in Fig. 10. The second binding material (1107) which has been applied to the vicinity of the seam from the surface side of the second base fabric (1102) penetrates into the sewing thread while it also penetrates into the fibers constituting the woven fabric of the second base fabric of the seam. The second binding material (1107) which has penetrated comes into contact with the first binding material (1106) applied earlier and becomes integrated with it.

### <Embodiment 9: Second Base Fabric Penetration Step: Application Table>

In the second base fabric penetration step, the table for applying the binding material may be provided with notches or recesses to accommodate the raised portions of the first binding material on the first base fabric side which has been applied and dried earlier (e.g., Figs. 9, 11, and 13). The height of the raised portions after drying may be uneven. Therefore, when a dispenser which dispenses the second binding material at predetermined constant height is used in the second base fabric penetration step for penetration, the distance between the second base fabric and the dispenser may vary so that the dispense width may become wider or narrower. This can be reduced by accommodating the raised portions of the first binding material on the table side as described above. If a sensor for measuring the distance between the dispenser tip and the base fabric surface is installed on the dispenser for applying the binding material in order to control the measured distance to be constant (or be in a certain range), or if the raised portions of the first binding material do not have any effect, it is not necessary to provide the notches or recesses on the application table.

### <Embodiment 9: Second Base Fabric Penetration Step: Another Example of Application Method>

In the second base fabric penetration step, the airbag in which the first binding material has been allowed to penetrate from the seam on the first base fabric side is turned over before allowing the second binding material to penetrate. However, if such a configuration is feasible that an opening corresponding to the vicinity of the seam of the second base fabric on the table side is provided on the table, and the second binding material is allowed to penetrate from the seam on the second base fabric side into the sewing thread from the underside of the table through the aforementioned opening using a dispenser or the like, it is not necessary to turn the bag body over. In this case, the direction in which the binding material is applied for penetration may differ between the first base fabric penetration step and the second base fabric penetration step.

When the first base fabric or/and the second base fabric is a coated fabric, it is preferable to use the binding material consisting of the same type as the resin coated on each base fabric to allow to penetrate from the seam of each base fabric into the sewing thread. By selecting the material of the binding material to match the coating material of the coated fabric, it is expected that the adhesiveness to the coating material on the end surface of the base fabric, which faces the sewing hole through which the sewing thread of the seam passes will be increased.

When using different materials for the first binding material and the second binding material, including materials of the same type but with different viscosities, it is advisable to use different colors (for example, red and blue) so that they can quickly distinguished by appearance. Similarly, for the first base fabric and the second base fabric, it is advisable to use different colors for the base fabrics or different colors for the sewing threads (upper thread and lower thread during sewing) used on each base fabric side so that they can be easily distinguished during the manufacturing process.

When the airbag has a three-dimensionally sewn shape, it may not be possible to apply and penetrate the binding material to all seams in a single continuous line. In such a case, penetration steps can be added as needed.

### <Embodiment 9 Effect of Double-Side Application of Binding Material>

The present inventors measured how the internal pressure of the airbag changes over time during inflation of the airbag under the following conditions regarding the seam of the airbag: the binding material is applied only to one base fabric side of the seam consisting of two base fabrics (single-side application: dotted line); the binding material is applied to both sides, from one base fabric and from another base fabric side opposite to the base fabric (double-side application: solid line); and no binding material is applied to the stitch (no application: thin solid line). In Fig. 19, the horizontal axis represents the time (ms) with the inflator activation start time set to 0, and the vertical axis represents the inner pressure of the airbag (upwards on the vertical axis indicate higher inner pressure of the airbag). During the "inflation period" shown in Fig. 19, the inflator releases gas and the airbag inflates with the inner pressure of the airbag increasing. After the airbag is fully inflated and the inner pressure of the airbag is at its maximum, the inflation gas gradually leaks out more slowly than in the uncoated version, and the inner pressure of the airbag decreases. When comparing two versions, which differs only in the application method of the binding material, i.e., single-side application or double-side application, after a predetermined time (restraint period) has elapsed from the point of maximum inner pressure of the airbag (approximately 110 ms after the inflation begins (0 ms), which is necessary for human body protection in the event of a collision), the double-side application maintained a slightly higher pressure than the single-side application. The double-side application to the seam could reduce leakage of the inflation gas from the sewing hole.

### <Embodiment 9 Effect>

According to Embodiment 9, the method for manufacturing the airbag in which the inflation gas is less likely to leak out can be provided in which the first binding material and the second binding material are allowed to penetrate into the sewing thread to prevent a gap between it and the base fabric in the sewing hole area as a result of the twist of the fibers of the sewing thread tightening.

### <Embodiment 10> Mainly Corresponding to Claim 10

### <Embodiment 10 Overview>

Embodiment 10 is the method for manufacturing the airbag based on Embodiment 9, in which the first binding material and the second binding material have different viscosities.

### <Embodiment 10 Reason for Making Viscosity of Binding Material Penetrating First Higher>

When the first binding material penetrates from the seam of the first base fabric into the sewing thread, and then the whole is turned over to allow the second binding material to penetrate from the seam of the second base fabric into the sewing thread, it is preferable that the first binding material has higher viscosity than that of the second binding material applied later. Fig. 9 shows an example in which the first binding material applied first from the first base fabric side located on the upper side penetrates the sewing hole area but only partially through the thickness of the first base fabric. This is because if the viscosity of the first binding material allowed to penetrate first is lower, it further penetrates more easily than the example shown in Fig. 9 to reach the second base fabric surface, and as a result, the binding material may adhere to the table surface.

If the table on which the base fabric is placed has a hole, it can be configured such that, contrary to the above example, the first binding material and the second binding material are allowed to penetrate into the sewing thread of the seam from the corresponding base fabric side, respectively, after sewing the first base fabric and the second base fabric together. For example, in the case of a configuration that the table on which application of the binding material is performed has a hole in the vicinity of the seam so that the binding material can be applied from above and below by using a dispenser or the like, then assuming that the second base fabric faces the table side, it is preferable that the second binding material allowed to penetrate from the second base fabric side into the sewing thread has higher viscosity than the first binding material allowed to penetrate from the upper first base fabric into the sewing thread. This is because the second binding material is applied to the second base fabric from below so that it is likely to drip away from the fabric (i.e., toward the application device such as the dispenser). In this case, the second binding material is applied and allowed to penetrate before the first binding material is arrowed to penetrate from the upper first base fabric. This is because if the first binding material is first allowed to penetrate from above, the first binding material may reach the second base fabric surface side before the second binding material is applied.

It is particularly preferable to use the material type of the binding material where the solvent inside the binding material is lost during curing due to evaporation or the like, because even if the binding materials of such material type but having different viscosity are used, the first binding material and the second binding material will have the same composition after curing. If the first binding material and the second binding material have different viscosities, an area which the applied low-viscosity binding material penetrates (in a direction along a plane of the base fabric and a direction of the thickness of the base fabric) tends to become wider than an area over which the applied high-viscosity binding material spreads (see Figs. 9 and 11).

### <Embodiment 10Effect>

According to Embodiment 10, the method for manufacturing the airbag which is easier to manufacture while having the similar inflation gas leakage characteristics to that in Embodiment 9 can be provided by using the first binding material and second binding material with different viscosities.

### <Embodiment 11> Mainly Corresponding to Claim 11

### <Embodiment 11Overview>

Embodiment 11 is the method for manufacturing the airbag based on Embodiment 9 or Embodiment 10, in which, of the first binding material and the second binding material, the binding material applied first has higher viscosity.

### <Embodiment 11Viscosity of Binding Material Applied First>

In the case where, with respect to the bag body of the airbag formed by sewing the first base fabric and the second base fabric together and placed on the flat table, the binding material is first applied, for example, from above the table to allow the binding material to penetrate the sewing thread of the seam, if the binding material penetrates through the seam and reaches the table surface side, the binding material will adhere to the table surface. If a next bag body is set before the binding material which has adhered to the table surface is not sufficiently dry, the binding material which has adhered to the table surface may be transferred to an unexpected portion on the bag body surface. This may result in an unsightly appearance of the bag body, or make it difficult to fold the bag body for storage if clumps of the binding material remain on the bag body surface. Alternatively, even if the binding material which has adhered to the table surface is not transferred to another bag body, it may cure while still attached to the table surface and form protrusions, and when the binding material is applied, the surface of the base fabric on these protrusions may lift up and come into contact with application jigs. Therefore, the adhesion of the binding material to the table surface is undesirable.

Therefore, the binding material applied first must have viscosity such that it does not reach the bag body surface opposite to the side to which it is applied as a result of penetration between the fibers constituting the sewing thread in the sewing hole area and penetration into a gap between the sewing thread and the base fabric in the sewing hole area (including penetration into the woven fabric constituting at least the vicinity of the seam of the base fabric) at least until the initial application of the binding agent to entire base fabric is completed. Conversely, the binding material applied later cannot provide sufficient binding effect unless it reaches the points where the binding material applied first has penetrated between the fibers constituting the sewing thread in the sewing hole area or into the gap between the sewing thread and the sewing thread insertion cross section of the base fabric in the sewing hole area. Therefore, it is preferable that the binding material applied later has lower viscosity than that of the binding material applied first. Furthermore, it is preferable that the first binding material and the second binding material are of the same material type but have different viscosity, as this improves adhesiveness between the two.

Since the sewing thread and the sewing hole area on the side closer to the base fabric to which the binding material was applied first is filled with the binding material applied first, a resin with lower viscosity than the binding material used only for single-side application can also be used as the binding material applied later. Therefore, in principle, the next binding agent should be applied only after the binding agent applied first and having relatively high viscosity has reached a state where it can prevent the binding agent applied later from reaching the table surface. The time it takes for this state to be reached is determined as appropriate depending on the size of the airbag, the sewing method of the sewing thread (the number of the rows of the seam (e.g., one row or two rows), the length of the seam, or the like), and the like. In addition, to shorten working time, the low-viscosity binding agent may be applied using a method in which a certain amount of application pressure (higher pressure than that in natural dripping) to the binding material during application, such as spray application.

### <Embodiment 11Advantage of Applying Higher-Viscosity Binding Material First>

In general, a higher-viscosity binding material has higher viscosity than the lower-viscosity binding material of the same material type because the former contains less solvent. If the amount of solvent is small, the time it takes for the solvent to evaporate after application and for the binding material to dry (at least for the surface to dry and be cured enough not to stick to other surfaces) will be shorter than that for the lower-viscosity binding material. In the case of double-side application with the bag body turned over, it is advantageous that the drying time of the binding material applied first is shorter than the drying time of the lower-viscosity binding material applied later. In particular, the higher-viscosity binding material applied first provides the effect of shortening the time it takes for the binding material surface after application to dry and become non-sticky to the touch, and the effect of shortening the time it takes for the surface at least to dry and become non-sticky to the touch even if a drying process using an infrared heater or hot air is provided after application.

Conversely, even when the binding material is also applied from below through the hole in the table as in the modified example described in Embodiment 10, the binding material on the lower side should have a higher viscosity and thus be applied first. The reason for this is that: as described above, if the viscosity of the binding material on the lower side is low, it is likely to drip from the dispenser tip toward the dispenser body below; and if the binding material on the upper side has lower viscosity and is applied first, the binding material applied from the upper side may penetrate into the area where the binding material on the lower side is to be applied, making it difficult to properly apply the binding material on the lower side.

### <Embodiment 11Effect>

According to Embodiment 11, the method for manufacturing the airbag can be provided in which, by setting the viscosity of the binding material applied first higher than the viscosity of the binding material applied later, the binding materials can be applied properly.

### <Embodiment 12> Mainly Corresponding to Claim 12

### <Embodiment 12Overview>

Embodiment 12 is the method for manufacturing the airbag based on any one of Embodiment 9 to Embodiment 11, in which the binding material which is applied at first and has the relatively higher viscosity is applied to a side with an upper thread which is bound to the base fabric surface by a lower thread that is a single continuous sewing thread applied to the base fabric.

### <Embodiment 12Application Method of Binding Material>

Regarding the binding material, it may be transferred to a separate application device from the sewing device after sewing and then applied, or may be manufactured using a dual-purpose machine equipped with an application jig or device in which the binding material is applied to the sewn area while it remains on the table of the sewing device. To accommodate the various types of airbags with various sewing methods using, for example, an application device equipped with a single table, holes (or notches) matching the sewing patterns cannot be provided on the table. Therefore, the application should be performed with the bag body being placed on a flat table. In this case, the application should be performed from the upper base fabric side visible on the table, and the bag body is turned over after the application and drying on the upper side, then the application to the opposite side is performed.

The airbag of Embodiment 12 will be described using Figs. 14 to 16. Fig. 14 shows a schematic plan view of the seam viewed from the upper thread (1404a) side. Fig. 15 shows a schematic view of a longitudinal cross section at the location shown by A-A' in Fig. 14. Fig. 16 shows a schematic view of a transverse cross section at the location shown by C-C' in Fig. 14. When sewing the airbag of Embodiment 7, as shown in the schematic view of the longitudinal cross section in Fig. 15, the upper thread (1504a) pierces the first base fabric (1501) and the second base fabric (1502), is pulled out to the second base fabric (1502) surface on the lower thread (1504b) side, and is fixed (in the description of Embodiment 12, the first base fabric is assumed to be on the upper thread (1504a) side, but it may be reversed). The manufacturing method of the airbag of Embodiment 12 is a manufacturing method such that the application is performed at first from the base fabric side (e.g., first base fabric (1501)) which has been positioned on the upper side on the table during sewing. As shown in Fig. 16, the upper thread (1604a) is pulled out to the vicinity of the lower base fabric (1602) surface and is in a state where it pierces both base fabrics.

Therefore, compared to the case where the upper thread and the lower thread are located in the vicinity of the interface between the first base fabric and second base fabric as in the case in Fig. 9 or the like, when the first binding material (1606) is applied to the sewing thread (upper thread) (1604a) of the seam from the upper thread (1604a) side and is allowed to penetrate between the fibers, it is likely to penetrate through the hole in the seam toward the second base fabric (1602) side. When the binding material with higher viscosity than that of the second binding material (1607) applied next is used as the first binding material, it does not penetrate to the base fabric surface on the lower thread (1604b) side, but it is more likely to penetrate into the fibers of the upper thread than in the case where it is allowed to penetrate into the seam in a state that the lower thread is not strong (normal, or the upper thread is strong; examples of normal state: Figs. 2 and 4) as there is only the upper thread in the hole in the seam.

It should be noted that, although the thread indicated by the reference number 1504a in Fig. 15 is assumed to be the upper thread, and the thread indicated by 1504b is assumed to be the lower thread in the description of this example, it may also be configured such that 1504a represents the lower thread and 1504b represents the upper thread, and the binding material with relatively high viscosity is applied first from the lower thread side indicated by 1504a.

### <Embodiment 12Effect>

According to the method for manufacturing the airbag in Embodiment 12, even if the high-viscosity binding material is used as the binding material applied first, it can penetrate sufficiently into the sewing thread on the application side.

### <Embodiment 13>

### <Embodiment 13 Overview>

Embodiment 13 is the method for manufacturing the airbag of Embodiment 1, in which the binding material is applied to the seam on the surface of either the first base fabric or the second base fabric, the binding material is allowed to penetrate between the fibers exercising the sewing thread in the sewing hole area from the sewing hole area, and the binding material is allowed to penetrate between at least some of fibers constituting a sewing thread exposed between the sewing holes on a base fabric surface opposite to the side to which the binding material has been applied.

### <Embodiment 13Manufacturing Method>

The method for manufacturing the airbag of Embodiment 13 will be described using: a flow diagram shown in Fig. 30; a schematic plan view of the seam of the base fabric on the side to which the binding material is applied shown in Fig. 25 (in Embodiment 13, an example in which the binding material is applied to the first base fabric side will be described); and a schematic view of a longitudinal cross section of the seam in Fig. 26. The method for manufacturing the airbag of Embodiment 13 consists of a binding material penetration step (S3001) and an opposite base fabric side sewing thread fiber binding material penetration step (S3002).

The binding material penetration step (S3001) involves a process of applying the binding material to a seam on a surface of either the first base fabric or the second base fabric, and allowing the binding material to penetrate between the fibers constituting the sewing thread inside the sewing hole area from the sewing hole area on the seam; and
the opposite base fabric side sewing thread fiber binding material penetration step (S3002) involves a process of allowing the binding material to penetrate between at least some of fibers constituting a sewing thread exposed between the sewing holes on a base fabric surface opposite to the base fabric to which the binding material has been applied (a different sewing thread from the sewing thread exposed between the sewing holes on the base fabric surface to which application has been performed).

If the penetration steps are repeated multiple times such as in a case where the penetration steps in which the binding material is divided or where the application is performed multiple times, it is also possible to configure the process to return to before the binding material penetration step (S3001) after the opposite base fabric side sewing thread fiber binding material penetration step (S3002) as shown in Fig. 30.

This is the method for manufacturing the airbag, involving such a series of processes.

### <Embodiment 13 Binding Material Penetration Step (S3001)>

In the "binding material penetration step" (S3001), the binding material is applied from the surface side one of the first base fabric or the second base fabric to the seam on the surface of the one of the base fabrics. This is a step of allowing the applied binding material to penetrate between the fibers constituting the sewing thread within the sewing hole area from the sewing hole area of the seam. Once the binding material penetrates between the fibers constituting the sewing thread, it penetrates between the fibers and binds at least some of the fibers as in schematic views shown in Figs. 17 and 18 or a cross-sectional SEM photograph shown in Fig. 29.

The binding material that has penetrated the sewing hole area penetrates through a gap between the cross sections of the first base fabric and the second base fabric in the sewing hole area and the sewing thread, or along the space between the fibers of the sewing thread, toward the base fabric surface opposite to the base fabric to which it has been applied (toward the opposite second base fabric surface when it has been applied from the first base fabric surface).

### <Embodiment 13Opposite Base Fabric Side Sewing Thread Fiber Binding Material Penetration Step (S3002)>

In the "opposite base fabric side sewing thread fiber binding material penetration step" (S3002), the binding material, which has penetrated through the sewing hole area toward the basic fabric surface (in Embodiment 13, the second base fabric) opposite to the base fabric to which the binding material has been applied, emerges from the sewing hole area toward the second base fabric surface side and penetrates through the second base fabric surface and between at least some of the fibers constituting the sewing thread connecting the sewing hole area. The penetration of the binding material between the fibers constituting the sewing thread occurs due to the binding material moving in a minute gap between the fibers by capillary action.

It should be noted for the application of the binding material that, although only the application from the first base fabric side is described in the above example, it may also be configured such that the binding material from first base fabric side is applied and cured after the opposite base fabric side sewing thread fiber binding material penetration step, and then the binding material is further applied from the second base fabric side.

As in Embodiment 13, by the binding material penetrating between at least some of the fibers constituting the sewing thread between the sewing hole areas of the base fabric surface opposite to the application side, the binding material can bind not only the fibers constituting the sewing thread on the base fabric surface of the application side but also at least some of the fibers constituting the sewing thread on the opposite side to the application side. As a result, this can prevent a gap from being formed between the sewing thread and the base fabric in the sewing hole area of the seam as a result of the twist of the sewing thread tightening by tension generated in the sewing thread.

In the method for manufacturing the airbag of Embodiment 13, when the binding material is applied only from a single side, it is preferable that the lower limit of the viscosity of the binding material to be applied is higher than the viscosity of the binding material which would be applied later in the case of double-side application. In double-side application, the sewing thread or the sewing hole area in the vicinity of the base fabric side to which it is applied first is bound by the binding material, making it difficult for the binding material to penetrate. Thus, the binding material applied later is hindered by the binding material applied first. In single-side application, the applied binding material is not hindered, so the lower limit of the viscosity should be increased to prevent excessive penetration to the base fabric side opposite to the application side.

### <Embodiment 13Effect>

In the method for manufacturing the airbag of Embodiment 13, even in the case of single-side application instead of double-side application, the fibers constituting the sewing thread between the sewing hole areas of the base fabric surface opposite to the application side can be bound by the binding material. This can prevent a gap from being formed between the sewing thread and the sewing thread insertion cross section of the base fabric in the sewing hole area of the seam.

### <Embodiment 14>

### <Embodiment 14Overview>

Based on the method for manufacturing the airbag of Embodiment 13, included is a base fabric bonding step in which a portion of the binding material which has further penetrated from the sewing hole area accumulates between the first base fabric and the second base fabric in order to bond the first base fabric and the second base fabric.

### <Embodiment 14 Manufacturing Method>

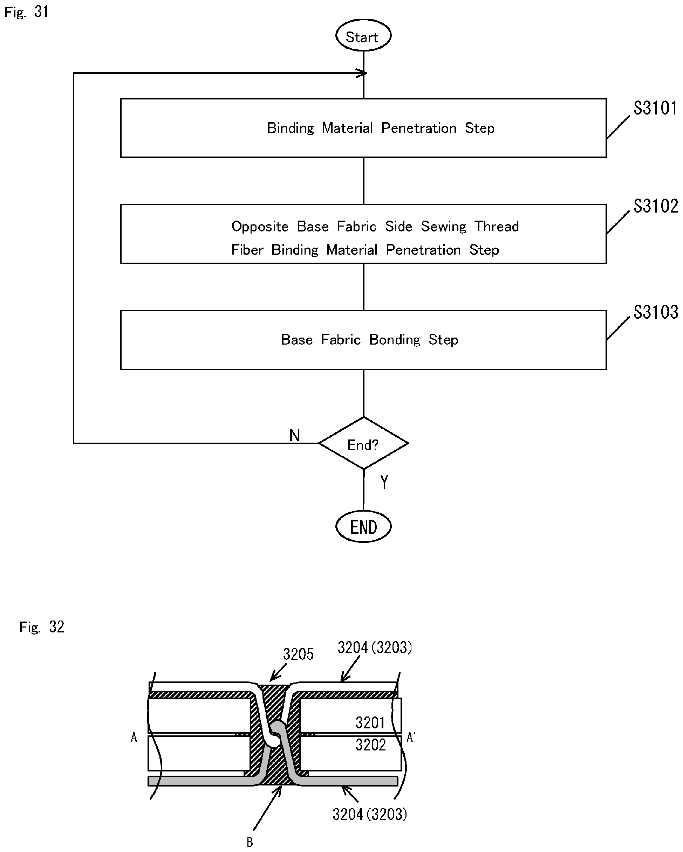

The method for manufacturing the airbag of Embodiment 14 based on the manufacturing method of Embodiment 13 will be described using Fig. 31. As shown in Fig. 31, it includes the base fabric bonding step (S3103) in addition to the steps of the manufacturing method of Embodiment 13. The steps other than base fabric bonding step (S3103) are the same as in Embodiment 13, so the description thereof will be omitted.

### <Embodiment 14Base Fabric Bonding Step (S3103)>

The "base fabric bonding step" (S3103) is configured such that a portion of the binding material applied to the seam on the surface of either the first base fabric or the second base fabric and having penetrated from the sewing hole area of the seam accumulates between the first base fabric and the second base fabric in order to bond the first base fabric and the second base fabric. When the binding material is cured after the binding material has penetrated into the sewing hole area and between at least some of the fibers constituting the sewing thread in the binding material penetration step (S3101) and the opposite base fabric side sewing thread fiber binding material penetration step (S3102), the binding material accumulating between the first base fabric and the second base fabric is also cured to bond the first base fabric and the second base fabric in the vicinity of the sewing hole area. When the binding material is a thermosetting resin, the binding material is cured by heating the binding material to a predetermined temperature and maintaining the temperature after it has penetrated. When the binding material is a photocurable resin, it is cured by using methods and conditions appropriate to the resin constituting the binding material such as a method in which it is irradiated with light of a predetermined wavelength for a predetermined integrated light amount.

Fig. 32 is a schematic view of a cross section along a direction of the seam of Embodiment 14. In the example in Fig. 32, the binding material is applied to the seam on the surface of the first base fabric (3201). The binding material (3205) penetrates through the sewing hole area and the sewing thread toward the surface of the second base fabric (3202). The binding material also spreads and accumulates between the first base fabric (3201) and the second base fabric (3202). When the binding material (3205) is cured, the first base fabric and the second base fabric are bonded.

Fig. 29 is a cross-sectional SEM photograph of the airbag manufactured by the manufacturing method according to the present invention, taken across the direction of the seam. In this example, unlike the schematic view in Fig. 32, the upper sewing thread (2904a) in Fig. 29 is pulled out to the second base fabric (2902) side by the lower sewing thread (2904b). The figure shows that the binding material accumulates between the first base fabric (2901) and the second base fabric (2902) in order to bond both base fabrics in the vicinity of the sewing hole area.

As a result of bonding both base fabrics by the binding material which has penetrated from the sewing hole area and accumulated between the first base fabric and the second base fabric in the vicinity of the sewing hole area, a gap is less likely to be formed between the first base fabric and the second base when the airbag inflates with gas injection, and thus leakage of the inflation gas from the gap is less likely to occur. In particular, as a result of bonding both base fabrics in the vicinity of the sewing hole area including the sewing thread in the sewing hole area, it is also possible to prevent the sewing thread from moving at the sewing hole area during inflation of the airbag. It is possible to prevent a gap between the first base fabric and the second base fabric from being formed by the movement of the thread in the seam due to the movement of the sewing thread.

By applying the manufacturing method of Embodiment 14 to the airbag of Embodiment 1, the airbag can also be configured such that a portion of the binding material having penetrated from the sewing hole area accumulates between the first base fabric and the second base fabric in order to bond the first base fabric and the second base fabric.

### <Embodiment 14 Effect>

According to the method for manufacturing the airbag of Embodiment 14, the first base fabric and the second base fabric are bonded together, and as a result, a gap is less likely to be formed between the first base fabric and the second base when the airbag inflates with gas injection, and thus leakage of the inflation gas from the gap is less likely to occur. In particular, as a result of bonding both base fabric in the vicinity of the sewing hole area including the sewing thread in the sewing hole area, it is possible to prevent the sewing thread from moving at the sewing hole area during inflation of the airbag. It is possible to prevent a gap between the first base fabric and the second base fabric from being formed by the movement of the thread in the seam due to the movement of the sewing thread.

### <Embodiment 15> Mainly Corresponding to Claim 15

### <Embodiment 15Overview>

Embodiment 15 is the method for manufacturing the airbag based on any one of Embodiment 9 to Embodiment 12, in which the viscosity during application of the binding materials is expressed in Pascal seconds, and a viscosity range of the binding material with higher viscosity and the binding material with lower viscosity is from 3.0 mPa·s to 90 Pa·s.

### <Embodiment 15 Viscosity of Binding Material>

The viscosities of the first binding material and the second binding material are expressed in Pascal seconds, and the viscosity range of the binding material with higher viscosity and the binding material with lower viscosity is from 3.0 mPa·s to 90 Pa·s. Fig. 20 shows the relationship between viscosity of the binding material and gas retention within the airbag. The horizontal axis represents the viscosity of the binding material, and the vertical axis represents the gas preservability within the airbag. It shows the test results when the materials of the same viscosity are applied to both sides of the airbag seam. The binding materials with viscosity of 0 mPa·s or more and less than 3.0 mPa·s, and those with viscosity exceeding 90 Pa·s have poor manufacturability when dispensing using commonly used pneumatic dispensers. The binding materials with viscosity of 0 mPa·s or more and less than 3.0 mPa·s have too low viscosity, making it difficult to control the dispense amount with pneumatic pressure, and thus they are likely to spread over the base fabric surface and to flow to the back surface of the base fabric. The binding materials with viscosity exceeding 90 Pa·s have too high viscosity to be extruded and dispensed, by air pressure. Good manufacturability can be achieved in the range from 3.0 mPa·s to 90 Pa·s.

### <Embodiment 15 Viscosity of Binding Material: Experiment Result>

As described in Embodiment 4, the present inventors investigated conditions under which the internal pressure of the airbag after the airbag has inflated does not easily decrease, and found that applying the binding material to the seam makes it difficult for the inner pressure of the airbag to decrease, and that applying the binding material to the seam by double-side application makes it even more difficult for it to decrease than single-side application. Next, experiments were conducted by changing the viscosities of the binding materials applied to both sides, it was found that higher viscosity was preferable for the binding material applied first. Specifically, the viscosity should be on the lower viscosity side of the aforementioned viscosity range. Preferably, the viscosity H of the binding material applied first is in the range of 1.0 to 20 Pa·s, and the viscosity L of the binding material applied later is in the range of 1.0 mPa·s to 1.0 Pa·s (provided that H > L). More preferably, the viscosity of the binding material applied first is in the range of 1.5 to 4.0 Pa·s, and the viscosity of the binding material applied later is in the range of 100 to 600 mPa·s. When the binding material has viscosity higher than 90 Pa·s, the inner pressure of the airbag decreases quickly. It is presumed that this is because the higher-viscosity binding material became harder than the binding material within the prefered range after drying and curing, making it easier for cracks to be created in the binding material in the sewing hole area during inflation of the airbag, and thus causing the inflation gas to leak through these cracks.

### <Embodiment 15Effect>

The method for manufacturing the airbag of Embodiment 15 allows for good application properties during manufacturing and is easy to manufacture by setting the viscosity of the binding material within the aforementioned range.

### <Embodiment 16> Mainly Corresponding to Claim 16

### <Embodiment 16Overview>

Embodiment 16 is the method for manufacturing the airbag based on any one of Embodiment 13 to Embodiment 14 in which the viscosity during application of the binding material is expressed in Pascal seconds, and a viscosity range is from 3.0 mPa·s to 90 Pa·s.

### <Embodiment 16Viscosity of Binding Material>

The viscosity of the binding material is expressed in Pascal seconds, and the viscosity range of the binding material with higher viscosity and the binding material with lower viscosity is from 3.0 mPa·s to 90 Pa·s. Fig. 19 shows the inner pressure of the airbag (vertical axis) over time (horizontal axis: ms) during inflation of the airbag. This figure shows test results of three versions of the airbags based on application of the binding material: double-side application (thick solid line), single-side application (thick dotted line), and no application (thin solid line). The results for the maximum inner pressure of the airbag were split between those with and without the application. During the restraint period after the airbag has inflated completely, the inner pressure of the airbag is maintained better in the case of double-side application than in the case of single-side application. However, the difference therebetween is small. Considering the difference in manufacturing costs between double-side application and single-side application, the airbag can be designed to tolerate this difference.

When the binding material with a low viscosity range such as less than 3.0 mPa·s is used as a binding material to be applied to the base fabric of the bag body to which the binding material has not been applied, the applied binding material penetrates from the application side of the base fabric placed on the table of the application device through the sewing hole area or the sewing thread before the binding material has been fully applied to the base fabric, and the binding material reaches the table surface. If the binding material reaches and adheres to the table surface, a problem may occur where this binding material in turn adheres to undesirable portions of the surface of another base fabric to which the binding material is applied next. If it adheres to the sewing thread of the base fabric surface in contact with the surface of the table or adheres to the sewing hole area, it may also hinder the penetration of the applied binding material. Therefore, the binding material with viscosity of less than 3.0 mPa·s is not used, and the binding material with viscosity from 3.0 mPa·s to 90 Pa·s is used.

The viscosity of the binding material in the case of single-side application is preferably 3.0 mPa·s to 15 Pa·s, and more preferably 3.0 mPa·s to 10 Pa·s, within the aforementioned range. The most preferable viscosity is 3.0 mPa·s to 3.0 Pa·s. Within this range, even if applied to only one side, it can penetrate at least some of the fibers constituting the sewing thread exposed between the sewing holes on the base fabric surface opposite to the base fabric to which it has been applied.

### <Embodiment 16Effect>

The manufacturing method of Embodiment 16 allows for good application properties during manufacturing and is easy to manufacture by using, as the binding material, the binding material with the viscosity of 3.0 m to 90 Pa·s.

### <Effect>

The present invention is configured such that at least some of the fibers in the sewing thread in the sewing hole area are bound by the binding material so that a gap is less likely to be formed between the sewing thread and the sewing thread insertion cross section of the base fabric in the sewing hole area as a result of the twist of the fibers of the sewing thread tightening during inflation of the airbag. This is because the presence of a binding material layer between the fibers prevents the spacing between the fibers from narrowing. When the binding material is applied to the seam constituted to prevent a gap from being formed between sewing thread and the base fabric in the sewing hole area as described above, in order to prevent the binding material from adhering to the table in contact with the surface opposite the surface to which it has been applied, a ratio of the sewing thread exposed from the binding material in areas other than the sewing hole area on the base fabric, and a ratio of the sewing thread covered with the binding material were specified. Then, regarding a ratio of the binding material between the fibers constituting the sewing thread, an area ratio of the cross section of the sewing thread (a ratio of the cross-sectional area of the binding material to the cross-sectional area of the thread) was specified. In addition, it is configured such that the binding material (corresponding to the "coating agent" in Patent Literature 1) is not applied only from one side but from both surfaces, and the binding material with higher viscosity is used as the binding material applied at first than the binding material applied to the opposite side. This can prevent the binding material from adhering to the support table through the bag body and the seam of the bag body during operation.

By specifying the viscosity in the case of single-side application, the seam can be efficiently sealed, the flow of the binding material onto the base fabric surface opposite to the application surface can be adjusted, and furthermore, a predetermined ratio of the binding material can be dispersed between the fibers constituting the sewing thread. In the case of double-side application, the binding material with lower viscosity is used as the binding material applied to the opposite side later than the binding material applied at first so that the binding material is more likely to penetrate between the fibers constituting the twisted thread and integrates with the binding material applied at first, allowing for sealing of the seam with high work efficiency. Furthermore, the method for manufacturing the bag body of an airbag can be provided in which, at least some of the fibers constituting the sewing thread are bound so that a gap is less likely to be formed between the sewing thread and the sewing thread insertion cross section of the base fabric in the sewing hole area as a result of the "twist" of the fibers of the sewing thread, which is twisted thread, tightening.

### Reference Signs List

- 0201: First Base Fabric
- 0202: Second Base Fabric
- 0203: Fiber
- 0204: Sewing Thread
- 0205: Binding Material

## Claims

1. An airbag, consisting of:
a sheet-like first base fabric, a sheet-like second base fabric, and a sewing thread made by twisting multiple fibers together for sewing the first base fabric and the second base fabric together to form a seam to form a gas injection space, wherein
at least some of fibers of the sewing thread are bound by a binding material so that a gap is less likely to be formed between the sewing thread and the base fabrics in a sewing hole area of the seam as a result of twist of the sewing thread tightening by tension generated in the sewing thread.

2. The airbag according to claim 1, wherein
at least a portion of the sewing thread is exposed from the binding material in an area other than the sewing hole area on at least one or more base fabrics among the first base fabric or the second base fabric.

3. The airbag according to claim 2, wherein
in a region which is present on a base fabric surface of one base fabric of the base fabrics on a side where the binding material has been applied to a seam and which runs along a sewing direction with a width approximately equal to a thickness of the sewing thread, a two-dimensional ratio of an area of the sewing thread exposed from the binding material at least partially is larger than 0% and smaller than or equal to 30%.

4. The airbag according to claim 2, wherein
in a region which is present on a base fabric surface of one base fabric of the base fabrics on a side where the binding material has not been applied to the seam and which runs along the sewing direction with a width approximately equal to the sewing thread (which may include the sewing thread from the opposite base fabric), a two-dimensional ratio of an area covered with the binding material (including both of the sewing thread and the base fabric) is 5% or more.

5. The airbag according to claim 1 or 2, wherein
the sewing thread on a side of the base fabric where the binding material has been applied has a cross-sectional area of the binding material which is 10% or more and 25% or less of a cross-sectional area of the sewing thread (55% or more and 100% or less of a cross-sectional area of a part other than the fibers in the cross-sectional area of the sewing thread).

6. The airbag according to claim 1 or 2, wherein
the sewing thread on a side of the base fabric where the binding material has not been applied has a cross-sectional area of the binding material which is 5% or more and 25% or less of a cross-sectional area of the sewing thread (35% or more and 100% or less of a cross-sectional area of a part other than the fibers in the cross-sectional area of the sewing thread).

7. The airbag according to claim 1, wherein
when at least a portion of the seam of the first base fabric or/and the second base fabric is made of woven fabric,
fibers constituting the woven fabric in a vicinity of the seam are bound by the binding material so that fibers constituting the woven fabric of the seam of the first base fabric or/and the second base fabric are less likely to unravel.

8. The airbag according to claim 7, wherein
the binding material used for the sewing thread and the binding material used for the first base fabric or/and the second base fabric are the same binding material.

9. A method for manufacturing the airbag according to claim 1, comprising
a first base fabric penetration step for allowing a first binding material to penetrate from a seam of a first base fabric into a sewing thread, and
a second base fabric penetration step for allowing a second binding material to penetrate from a seam of a second base fabric into the sewing thread.

10. The method for manufacturing the airbag according to claim 9, wherein
the first binding material and the second binding material have different viscosity.

11. The method for manufacturing the airbag according to claim 10, wherein
application of the first binding material and the second binding material is performed on a flat table, and of the two binding materials, the binding material applied at first is the binding material having higher viscosity compared to the binding material applied later.

12. The method for manufacturing the airbag according to claim 11, wherein
the binding material which is applied at first and has the relatively higher viscosity is applied to a side with an upper thread which is bound to the base fabric surface by a lower thread that is a single continuous sewing thread applied to the base fabric.

13. A method for manufacturing the airbag according to claim 1, comprising
a binding material penetration step for applying the binding material to a seam on a surface of either the first base fabric or the second base fabric, and allowing the binding material to penetrate between the fibers constituting the sewing thread inside the sewing hole area from the sewing hole area on the seam, and
an opposite base fabric side sewing thread fiber binding material penetration step for allowing the binding material to penetrate between at least some of fibers constituting a sewing thread exposed between the sewing holes on a base fabric surface opposite to the base fabric to which the binding material has been applied (a different sewing thread from the sewing thread exposed between the sewing holes on the base fabric surface to which application has been performed).

14. The method for manufacturing the airbag according to claim 13, further comprising
a base fabric bonding step in which a portion of the binding material which has further penetrated from the sewing hole area accumulates between the first base fabric and the second base fabric in order to bond the first base fabric and the second base fabric.

15. The method for manufacturing the airbag according to claims 9 to 12, wherein
viscosities during application of the binding materials are expressed in Pascal seconds, and a viscosities range of the binding material with higher viscosity and the binding material with lower viscosity is from 3.0 mPa·s to 90 Pa·s.

16. The method for manufacturing the airbag according to claims 13 to 14, wherein
a viscosity range during application of the binding material is from 3.0 mPa·s to 90 Pa·s in Pascal seconds.
